# EUROPÄISCHE PATENTANMELDUNG

(11) **EP 3 799 994 A1**
(43) Veröffentlichungstag der Anmeldung: **07.04.2021**
(21) Anmeldenummer: 19000446.5
(22) Anmeldetag: 03.10.2019
(51) Int. Cl.: B23K 9/12, B23K 9/26

(54) **LICHTBOGENSCHWEISSBRENNER**

(71) Anmelder: SKS Welding Systems GmbH, 67661 Kaiserslautern (DE)
(72) Erfinder: Klein, Thomas, 67688 Rodenbach (DE)
(74) Vertreter: Klein, Friedrich Jürgen

(57) **Zusammenfassung**

Um bei einer Lichtbogenschweißbrennereinrichtung mit einer als Schweißdraht ausgebildeten abschmelzenden Elektrode, wobei die Elektrode mit einer Bewegungsrichtung von einem hinteren Ende der Lichtbogenschweißbrennereinrichtung zum Vorschub in Richtung eines vorderen Endes der Lichtbogenschweißbrennereinrichtung vorgesehen ist, in dessen Bereich die Elektrode während eines Lichtbogenschweißprozesses abschmilzt, die Elektrode in der Lichtbogenschweißbrennereinrichtung in einer austauschbaren Drahtseele geführt ist, wobei die Drahtseele wiederum zumindest im Bereich des hinteren Endes des Lichtbogenschweißbrenners in einem die Drahtseele umgebenden und als austauschbares Verschleißteil ausgebildetes Führungselement angeordnet ist, wobei das Führungselement der Drahtseele zum gemeinsamen verschleißbedingten Austausch der Drahtseele vorgesehen ist, im Bereich des prozeßseitigen Endes eine möglichst widerstandslose Bewegung des Schweißdrahts mit einer möglichst geringen Gefahr, daß der Schweißdraht aufgrund der Vorschubbewegung ausknickt, zu erreichen, wird eine einstückige Ausbildung des Führungselements zusammen mit einem Bauteil der Lichtbogenschweißbrennereinrichtung vorgeschlagen, das für den Eintritt des Schweißdrahts in die Lichtbogenschweißbrennereinrichtung eine Eintrittsöffnung aufweist, sowie für die Führung eines als Elektrode vorgesehenen abschmelzenden Schweißdrahts von der Eintrittsöffnung bis zumindest dem hinteren Ende der Drahtseele vorgesehen ist.

## Beschreibung

Die Erfindung betrifft eine Lichtbogenschweißbrennereinrichtung mit einer abschmelzenden Elektrode, wobei die Elektrode mit einer Bewegungsrichtung von einem hinteren Ende der Lichtbogenschweißbrennereinrichtung zum Vorschub in Richtung eines vorderen Endes der Lichtbogenschweißbrennereinrichtung vorgesehen ist, in dessen Bereich die Elektrode während eines Lichtbogenschweißprozesses abschmilzt, die Elektrode in der Lichtbogenschweißbrennereinrichtung in einer austauschbaren Drahtseele geführt ist, wobei die Drahtseele wiederum zumindest im Bereich des hinteren Endes der Lichtbogenschweißbrennereinrichtung in einem die Drahtseele umgebenden und als austauschbares Verschleißteil ausgebildetes Führungselement angeordnet ist, wobei das Führungselement der Drahtseele zum gemeinsamen verschleißbedingten Austausch der Drahtseele vorgesehen ist.

Es existiert eine Vielzahl von unterschiedlichen Schweißverfahren. Die vorliegende Erfindung hat besondere Bedeutung für das Lichtbogenschweißen. Dieses basiert auf einer Hitzeentwicklung eines elektrischen Lichtbogens zwischen einer Schweißelektrode und einem Werkstück, an dem eine Schweißung vorgenommen werden soll. Durch die Hitzeentwicklung kann der bzw. können die zu schweißenden Werkstoffe lokal aufgeschmolzen werden. Bei nahezu sämtlichen Lichtbogenschweißverfahren wird dem Bereich des Lichtbogens hierzu ein Schutzgas zugeführt, um einerseits eine widerstandssenkende ionisierte Atmosphäre zwischen der Schweißelektrode und dem Werkstück zu ermöglichen und um andererseits eine Oxidation der Schweißelektrode und des Werkstücks zu verhindern. Anstelle eines hierbei als Schutzgas vorgesehenen Inertgases kann auch ein Aktivgas oder eine Mischform zugeführt werden, das zur Reaktion dient. Ebenso können Elektroden vorgesehen sein, die keine externe Gaszuführung benötigen, da die hierfür erforderlichen Substanzen in den Elektroden integriert sind und beim Abschmelzen der Elektroden freigesetzt werden.

Ein Lichtbogen-Schweißbrenner ist üblicherweise derart ausgelegt, daß ein Benutzer oder ein Roboter einen Metallschweißdraht, der auch als Metallzusatzwerkstoff bezeichnet werden kann, auf eine spezifizierte Fügestelle auf dem Zielmetallstück richten kann. Der Schweißdraht wird durch den Schweißbrenner geführt und schließlich durch eine Öffnung in der Kontaktdüse am prozeßseitigen Ende des Schweißbrenners zum Zielmetallstück transportiert.

Bei Anlegen einer elektrischen Spannung am Schweißbrennerinnenrohr und beim Kontaktieren des Schweißdrahtes mit dem Zielmetallstück, fließt ein hoher elektrischer Strom von einem Schweißbrennerinnenrohr über einen sogenannten Düsenstock, dann über die Kontaktdüse, über den Schweißdraht und gegebenenfalls einem Lichtbogen zum Zielmetallstück und dann zur Masse. Der hohe Strom und der Lichtbogen verursachen das Schmelzen des Schweißdrahtes in einer Schutzgasatmosphäre, was zur Tropfenbildung des Drahtes und zum Entstehen eines Lichtbogens führt.

Dieser Lichtbogen schmilzt das Metall der Zielmetallstücke und den nachgeführten Schweißdraht. Durch Abfallen der entstanden Tropfen des Schweißdrahtes oder durch Übergabe des Tropfens im Kurzschluss auf die verflüssigte Stelle der Zielmetallstücke, werden diese miteinander verbunden. Aufgrund des geringen Abstandes von der Kontaktdüse und der Gasdüse zum Lichtbogen bzw. zum aufgeheizten Zielmetallstück werden diese Bauteile stark erwärmt. Durch die hohe thermische Belastung ist vor allem die Kontaktdüse starkem Verschleiß ausgesetzt.

Herkömmliche Brennersysteme bestehen in ihrem vorderen, schweißprozeßseitigem, Endabschnitt in der Regel im Wesentlichen aus der Kontaktdüse, dem Düsenstock und der äußeren Gasdüse. Diese Bauteile sind am Brennerhals (Außenrohr, Innenrohr) in der Regel lösbar montiert und thermisch bzw. elektrisch über Kontaktflächen, Gewinde miteinander oder mit anderen Bauteilen des Brennerhalses gekoppelt oder auch isoliert. Das Außenrohr muss jedoch von stromführenden anderen Bauteilen elektrisch entkoppelt sein, da dort aus Sicherheitsgründen keine Spannung anliegen darf. Durch die thermische Kopplung der Bauteile wird versucht, die Energie, welche in Form von Wärme in die Kontaktdüse bzw. Gasdüse eingeleitet wird, über das Außenrohr bzw. Innenrohr möglichst wirksam abzuleiten und dadurch die Maximaltemperatur der Kontaktdüse zu senken, um den Verschleiß zu minimieren.

Üblicherweise wird bei gattungsgemäßen Lichtbogenschweißbrennereinrichtungen im Bereich von deren hinterem Ende der als abschmelzende Elektrode fungierende Schweißdraht des Lichtbogenschweißbrenner sowie das Schutzgas zugeführt, sofern das jeweilige Schweißverfahren ein solches Gas vorsieht. Der Schweißdraht wird durch das Innere des Lichtbogenschweißbrenners von dessen hinterem Ende bis zum Austritt aus dem vorderen, prozeßseitigem Ende entsprechend des Verbrauchs vorgeschoben. Hierzu ist im Bereich des hinteren Endes ein an sich vorbekannter Drahtvorschub angeordnet, der beispielsweise mittels eines angetriebenen Räderpaares den Schweißdraht vorschiebt und durch das Innere der Lichtbogenschweißbrennereinrichtung bewegt. Um das Innere der Lichtbogenschweißbrennereinrichtung selbst vor Verschleiß aufgrund der Vorschubbewegung des Schweißdrahts zu schützen, wird der Schweißdraht üblicherweise in einer sogenannten Drahtseele angeordnet. Der Verschleiß aufgrund der Vorschubbewegung des Schweißdrahts findet somit vor allem in der Drahtseele und nicht an Bauteilen des Gehäuses der Lichtbogenschweißbrennereinrichtung statt. Letztere verschleißt somit anstelle des Inneren der Lichtbogenschweißbrennereinrichtung selbst. Als Folge davon ist es erforderlich, dass die Drahtseele von Zeit zu Zeit verschleißbedingt ausgetauscht wird.

Herkömmlicherweise ist es für den verschleißbedingten Austausch der Drahtseele erforderlich, dass der Schweißbrennereinrichtung demontiert wird, insbesondere auch und vor allem das dem schweißprozessseitigen Ende abgewandte hintere andere Ende der Lichtbogenschweißbrennereinrichtung, das sich gegenüber den Drahtvorschubmitteln befindet. Dies ist mit großem zeitlichen Aufwand für die Demontage und Montage der Lichtbogenschweißbrennereinrichtung verbunden. Aus der EP 1 658 155 B1 ist deshalb bereits eine Lösung bekannt geworden, bei welcher der Austausch der Drahtseele vom schweißprozeßseitigen Ende der Lichtbogenschweißbrennereinrichtung aus erfolgt. Zur Demontage und Entnahme der Drahtseele muß lediglich das vordere Ende der Lichtbogenschweißbrennereinrichtung demontiert, eine Verbindung eines Führungsmittels für die Drahtseele mit weiteren Bauteilen des Lichtbogenschweißbrenners gelöst und das Führungsmittel zusammen mit der Drahtseele entnommen werden. Anschließend wird eine neue Drahtseele zusammen mit dem Führungsmittel wieder von vorne in die Lichtbogenschweißbrennereinrichtung eingeführt, bis zum hinteren Ende des Schweißbrenners durchgeschoben und das Führungsmittel wieder innerhalb der Lichtbogenschweißbrennereinrichtung lösbar befestigt.

Unabhängig davon, ob die Drahtseele vom vorderen oder vom hinteren Ende der Lichtbogenschweißbrennereinrichtung aus gewechselt wird, stellt sich bei beiden Lösungen das Problem, dass im Betrieb der Lichtbogenschweißbrennereinrichtung der Schweißdraht zwischen den üblicherweise als rotierendes Rollenpaar ausgebildeten Drahtvorschubmitteln und dem hinteren, den Drahtvorschubmitteln unmittelbar gegenüberliegenden Ende, dazu tendieren kann zu knicken. Der durch die Drahtvorschubmittel geschobene Schweißdraht läuft durch eine enge Bohrung einer Endkappe in die Lichtbogenschweißbrennereinrichtung ein. Tritt hierbei ein Widerstand auf, beispielsweise aufgrund von Reibung des Schweißdrahts in der Bohrung, kann hierdurch der Draht außerhalb der Endkappe auslenken und knicken. Um dem entgegen zu wirken, wird üblicherweise die Stirnseite der Endkappe konisch gestaltet, damit die Endkappe ein Stück weit in den trichterförmigen Bereich zwischen den beiden Antriebsrollen eingeschoben werden kann. Der dadurch etwas verkürzte Bereich zwischen der Kontaktstelle der Antriebsrollen mit dem Schweißdraht und der Einlaufstelle des Schweißdrahts der Endkappe, in dem sich der Schweißdraht sich noch nicht im Lichtbogenschweißbrenner bzw in der ihn schützenden Drahtseele befindet, verringert zwar etwas das Problem des Knickens, allerdings nur geringfügig. Die Gefahr eines Ausknickens ist trotzdem weiterhin praxisrelevant vorhanden, insbesondere aber nicht nur bei sehr dünnen, weichen Drähten.

Der Erfindung liegt deshalb die Aufgabe zugrunde, eine Maßnahme vorzuschlagen, durch welche sich im Bereich des prozeßseitigen Endes eine möglichst widerstandslose Bewegung des Schweißdrahts mit einer möglichst geringen Gefahr, daß der Schweißdraht aufgrund der Vorschubbewegung ausknickt, erreichen läßt.

Diese Aufgabe wird bei einer Lichtbogenschweißbrennereinrichtung der eingangs genannten Art erfindungsgemäß durch eine einstückige Ausbildung eines Bauteils der Lichtbogenschweißbrennereinrichtung gelöst, das für den Eintritt des Schweißdrahts in den Lichtbogenschweißbrenner eine Eintrittsöffnung einer Durchgangsausnehmung aufweist, sowie für die Führung des Schweißdrahts im Lichtbogenschweißbrenners innerhalb der Durchgangsausnehmung von der Eintrittsöffnung bis zumindest dem hinteren Ende der Drahtseele vorgesehen ist, wobei dieses eine Bauteil auch als ein aus der Lichtbogenschweißbrennereinrichtung herausragendes und zwischen einer äußeren Endkappe des Gehäuses der Lichtbogenschweißbrennereinrichtung und dem Drahtvorschubmittel angeordnetes Knickschutzmittel für den Schweißdraht vorgesehen ist, in welchem der Schweißdraht in der Durchgangsausnehmung geführt ist.

Der Erfindung liegt somit der Gedanke zugrunde, den Schweißdraht von seinem Eintritt in die Lichtbogenschweißbrennereinrichtung bis zum hinteren Ende der Drahtseele in lediglich einem einzigen Bauteil zu führen und ihn in diesem Bauteil an die Drahtseele zu übergeben. Dieses weitere Bauteil soll sich vorzugsweise zumindest von der Endkappe aus in Richtung zum Drahtvorschubmittel erstrecken. Vorzugsweise ist die schweißprozeßseitige Stirnseite dieses einstückigen Bauteils jedoch im Bereich der Längsachse des Schweißdrahts mit Abstand zur Innenseite der Endkappe angeordnet, wobei dieser Abstand zur Ausbildung der Aufnahme für die Drahtseele in diesem Bauteil vorgesehen sein kann. Außerdem soll dieses als zusätzliches Bauteil zur Endkappe vorgesehene und vorzugsweise auch als Knickschutzmittel ausgebildete Bauteil im Bereich seines drahtvorschubseitigen Endes eine möglichst geringe radiale äußere Erstreckung in Bezug auf die Längsachse des Schweißdrahts aufweisen, insbesondere eine deutlich geringere äußere radiale Ausdehnung in einer Ebene, die senkrecht zu den Drehachsen der vorzugsweise beiden Rollen des Drahtvorschubmittels ausgerichtet ist. Das Knickschutzmittel kann hierdurch durch die Endkappe hindurchgeführt sein und möglichst nahe an der Kontakt- und Wirkstelle des üblicherweise als zwei gegenläufige Rollen ausgebildeten Drahtvorschubmittel mit dem Schweißdraht angeordnet werden, wodurch die Strecke, entlang welcher der Schweißdraht geschoben wird und dabei frei und ungeführt verläuft, möglichst kurz gehalten werden kann. Das in das Bauteil integrierte Knickschutzmittel kann insbesondere in axialer Richtung, hin zu den Drahtvorschubmitteln, über die Endkappe vorstehen. Hierdurch ergibt sich eine längere Strecke, in welcher der geschobene Schweißdraht geführt ist, was die Neigung des Schweißdrahts in seinem ungeführten Abschnitt durch die Vorschubbewegung auszuknicken, maßgeblich verringert. Auch der saubere Einlauf des Drahtes beim automatisierten Einfädeln wird dadurch erheblich verbessert.

Eine Verbesserung eines sauberen Einlaufs des Schweißdrahts in das Knickschutzmittel und eine Verbesserung der Funktionssicherheit beim Einfädeln des Schweißdrahts in das Knickschutzmittel kann auch durch eine Fase der Begrenzungswand der Durchgangsausnehmung für den Schweißdraht im einstückigen Bauteil im Bereich der Eintrittsöffnung der Durchgangsausnehmung erreicht werden. Auch durch eine solche Fase tendiert der Schweißdraht weniger zu einem Verhaken mit der Begrenzungswand der Durchgangsausnehmung, wodurch das Risiko eines Knicks des Schweißdrahts weiter reduziert werden kann.

Es kann im Zusammenhang mit der vorliegenden Erfindung besonders zweckmäßig sein, wenn das Knickschutzmittel austauschbar ist, wodurch auf einen durch die Bewegung des Schweißdrahts im Knickschutzmittel bedingten Verschleiß reagiert werden kann. Auch diese Austauschbarkeit ist in einer bevorzugten Ausführungsform der Erfindung durch die einstückige Ausbildung mit dem die Drahtseele aufnehmenden Bauteils erzielbar. Da dieses die Drahtseele im Inneren des Lichtbogenschweißbrenners aufnehmende Bauteil vorzugsweise zusammen mit der Drahtseele zu deren gemeinsamen Austausch aus dem Lichtbogenschweißbrenner zu dessen schweißprozeßseitigen Ende gezogen und aus diesem herausgeführt werden kann, kann dieses Bauteil, welches auch das Knickschutzmittel enthält, auf einfache Weise gegen ein neues unverschlissenes Knickschutzmittel ausgetauscht werden. Dieses neue Bauteil wird dann zusammen mit einer neuen Drahtseele und mit dem daran einstückig ausgebildeten ebenfalls neuen Knickschutzmittel voran, vom schweißprozeßseitigem Ende wieder in die Lichtbogenschweißbrennereinrichtung eingeführt und bis zum drahtvorschubseitigen Ende der Lichtbogenschweißbrennereinrichtung in diesem hindurchgeschoben. Am drahtvorschubseitigen Ende der Lichtbogenschweißbrennereinrichtung wird diese Einschubbewegung vorzugsweise dadurch gestoppt, dass das Bauteil gegen einen Anschlag anstößt. Das Knickschutzmittel sollte hierbei auch seine Endlage in der Lichtbogenschweißbrennereinrichtung erreicht haben, in der es durch die Endkappe hindurchgeführt ist und vorzugsweise ein Abschnitt aus der Endkappe in Richtung zum Drahtvorschubmittel herausragt.

In einer bevorzugten Ausführungsform der Erfindung kann vorgesehen sein, daß das Knickschutzmittel im Inneren der Lichtbogenschweißbrennereinrichtung lösbar angeordnet ist und ein Abschnitt des Knickschutzmittels aus einer Ausnehmung der Endkappe der Lichtbogenschweißbrennereinrichtung in Richtung zum Drahtvorschubmittel hinausragt. Hierdurch lässt sich eine besonders einfache Anordnung, Positionierung und gegebenenfalls auch ein einfacher Austausch des Knickschutzmittels erreichen. Die Ausnehmung der Endkappe und/oder das Innere des Lichtbogenschweißbrenners können dazu vorgesehen sein, insbesondere durch Formschluss zwischen dem Knickschutzmittel und insbesondere dem Gehäuse des Lichtbogenschweißbrenners, eine positionsgenaue und positionssichere Anordnung des Knickschutzmittels zu erreichen.

Es ist im Zusammenhang mit der vorliegenden Erfindung ferner bevorzugt, daß das Knickschutzmittel einstückiger Bestandteil eines Bauteils ist, in welchem die Drahtseele im Bereich der Endkappe im Inneren des Lichtbogenschweißbrenners angeordnet ist. Hierdurch läßt sich besonders einfach eine sehr genaue Abstimmung der Führung des Schweißdrahts im Knickschutzmittel und im Inneren des Lichtbogenschweißbrenners erreichen. Ein Vorteil besteht auch beim automatisierten Einfädeln des Drahtes, wodurch beim einstückigen Aufbau ein Verhaken des Drahtes in der Lichtbogenschweißbrennereinrichtung vermieden wird. Vor allem bietet diese Lösung durch die vorteilhafte Einstückigkeit aber die Möglichkeit einer übergangs- und absatzlosen Ausbildung der zumindest einen Führungsfläche für den Schweißdraht, die vom Knickschutzmittel bis zum Beginn bzw hinteren Ende der Drahtseele im Inneren des Lichtbogenschweißbrenners reichen. Die Vermeidung von Übergängen in dieser zumindest einen Führungsfläche, nämlich der Begrenzungsfläche der Durchgangsausnehmung des Knickschutzmittels, trägt zusätzlich zum verbesserten Knickschutzmittel dazu bei, den Widerstand beim Vorschub des Schweißdrahts möglichst gering zu halten und damit ein Knicken des Schweißdrahts aufgrund der Vorschubbewegung zu verhindern. Schließlich führt die Einteiligkeit auch zu einer geringen Anzahl an erforderlichen Bauteilen, die montiert, demontiert und als Ersatzteile bevorratet werden müssen.

In einer besonders vorteilhaften Ausführungsform der Erfindung, mit der sich das Knickschutzmittel besonders schnell montieren und auch, beispielsweise bei Verschleiß oder Beschädigung, austauschen läßt, kann vorgesehen sein, daß das Knickschutzmittel verbindungslos am Lichtbogenschweißbrenner angeordnet ist. Eine verbindungslose Anordnung ermöglicht beispielsweise den Vorteil, daß die Montage und ein Austausch auch werkzeuglos vorgenommen werden kann. Um trotz der bevorzugten verbindungslosen Anordnung des Knickschutzmittels an der Lichtbogenschweißbrennereinrichtung eine positionsgenaue und sichere Anordnung des Knickschutzmittels an der Lichtbogenschweißbrennereinrichtung zu erreichen, kann vorgesehen sein, dass das Knickschutzmittel aufgrund einer formschlüssigen Anordnung des Knickschutzmittels in axialer Richtung im Lichtbogenschweißbrenners, in einer vorbestimmten Position, insbesondere einer axialen Position, im Lichtbogenschweißbrenner angeordnet ist.

In einer weiteren besonders vorteilhaften Ausführungsform der Erfindung kann vorgesehen sein, dass das Knickschutzmittel einstückig mit einer innerhalb des Lichtbogenschweißbrenners angeordneten Aufnahme für eine Drahtseele ausgebildet ist, in welche die Durchgangsausnehmung des Knickschutzmittels für den Schweißdraht mündet. Diese bevorzugte Ausbildung des Knickschutzmittels lässt sich beispielsweise dadurch erreichen, dass an einen zylindrischen ersten Abschnitt der äußeren Mantelfläche des Knickschutzmittels mit einem kleineren Außendurchmesser, ein konischer zweiter Abschnitt der Mantelfläche angefügt ist, der dann mit einem größeren Durchmesser in einen zylindrischen dritten Abschnitt mit vorzugsweise zumindest ungefähr ebenfalls konstanten, Durchmesser übergeht. Innerhalb dieses dritten Abschnitts kann eine zentrische stirnseitig offene Ausnehmung angeordnet sein, deren Innendurchmesser groß genug ist, um einen Endbereich der Drahtseele und den darin geführten Schweißdraht aufzunehmen. Vorzugsweise gelangt der Schweißdraht durch eine Öffnung im Knickschutzmittel in dieses einstückige Bauteil, die eine Ausnehmung mit einem konstanten Durchmesser freigibt, der im wesentlichen dem Durchmesser des jeweiligen Schweißdrahts entspricht und in der der Schweißdraht geführt ist, bis er die Drahtseele erreicht. Diese Ausnehmung kann mit Vorteil auch mit einem Innengewinde versehen sein, in welche eine schraubfederartig gewundene Drahtseele mit ihrer Außenfläche eingeschraubt sein kann. Das Knickschutzmittel besitzt an seinem drahtvorschubseitigen Ende von der Stirnseite beginnend, einen konischen Einlauf / eine Fase, welche erhebliche Vorteile beim automatisierten Einfädeln des Schweißdrahtes von den Vorschubmitteln her kommend, ergeben.

Die vorliegende Erfindung kann im Zusammenhang mit automatisierten Schweißprozeßen, bei denen eine Lichtbogenschweißbrennereinrichtung von einem Schweißroboter geführt und bewegt wird, besonders vorteilhaft sein. Hier besteht das Problem, daß zum Austausch einer verschlissenen Drahtseele möglicherweise nicht nur die Lichtbogenschweißbrennereinrichtung selbst ganz oder teilweise demontiert werden muß. Möglicherweise muß auch der Lichtbogenschweißbrenner der Brennereinrichtung selbst vom Roboter entfernt werden, damit ein Zugang zur Drahtseele besteht und ein Austausch der Drahtseele ermöglicht wird. Je umfangreicher eine Demontage erfolgen muß, umso umfangreicher und zeitaufwändiger gestaltet sich auch die nachfolgende Montage wieder. Es kann sogar aufgrund der Demontage ein erneutes zeitaufwändiges Teach-In des Schweissroboters mit dem daran angebrachten Lichtbogenschweißbrenner hinzukommen. Um eine weitgehende Demontage und eine nachfolgende erneute Einrichtung der automatischen Schweißanlage zu vermeiden, kann deshalb der erfindungsgemäße Drahtseelenaustausch von der Schweißprozeßseite her, zusammen mit dem erfindungsgemäßen Positionssignalisationsmittel besondere Vorteile mit sich bringen. Hiermit kann ein Austausch der Drahtseele schnell und ohne umfangreiche Demontagearbeiten und trotzdem sicher eine positionskorrekte Anordnung der neuen Drahtseele im Inneren der Lichtbogenschweißbrennereinrichtung erfolgen.

Im Zusammenhang mit der vorliegenden Erfindung kann dieser Vorteil besonders ausgeprägt sein, wenn als Roboter ein Hohlwellenroboter, wie beispielsweise ein solcher vom Typ "Motoman", welche vom Hersteller Yaskawa Europe GmbH, 65760 Eschborn, Deutschland, als Schweißroboter angeboten werden, zum Einsatz kommt. Bei derartigen Hohlwellenrobotern werden die Schweißmedien, wie der Schweißdraht, Schutzgas und elektrischer Strom, durch die als rotatorisch angetriebene Hohlwelle ausgebildete Aufnahme für die Anbringung des Lichtbogenschweißbrenners am Roboter, im wesentlichen oder zumindest näherungsweise konzentrisch zur Drehachse der Hohlwelle durchgeführt. Eine Demontage des Lichtbogenschweißbrenners selbst und von der Aufnahme des Roboters ist hier besonders arbeitsaufwändig. Ein solcher Hohlwellenroboter und eine besonders vorteilhafte Lösung für einen mit diesem Hohlwellenroboter zusammenwirkenden Lichtbogenschweißbrenner ist beispielsweise in der EP 1 689 550 B1 beschrieben. Deren Offenbarungsgehalt wird hiermit durch Bezugnahme vollständig aufgenommen.

Ein bevorzugter Lichtbogenschweißbrenner einer Lichtbogenschweißbrennereinrichtung, der zur Anordnung an einem Schweißroboter mit einem Roboterarm vorgesehen ist, kann deshalb eine relativ zum Roboterarm drehbare Anschlußeinrichtung aufweisen, die eine Befestigungseinrichtung zur Anbringung der Schweißbrennervorrichtung am Schweißroboter, eine Aufnahmeeinrichtung zur Halterung eines Schweißbrenners und zur Übertragung von angetriebenen rotatorischen Bewegungen auf den Schweißbrenner, einen elektrischen Anschluß für ein Schweißstromkabel, mittels dem eine Roboterseite der Schweißbrennervorrichtung mit einer Schweißstromquelle elektrisch verbindbar ist, und eine Stromübertragungseinrichtung, über die das Schweißstromkabel mit einer Schweißbrennerseite der Schweißbrennervorrichtung elektrisch verbindbar ist, umfasst. Die Stromübertragungseinrichtung kann einen Stator aufweisen, der gegenüber dem Roboterarm zur drehfesten Anordnung vorgesehen ist, jedoch in Bezug auf die schweißroboterseitige Anschlußeinrichtung relativ drehbar ist. Ferner kann eine Durchführung des Stators, durch die zumindest einer der für den Schweißvorgang benötigten Verbrauchsstoffe in Richtung zur Aufnahmeeinrichtung durchführbar ist vorgesehen sein, wobei die Aufnahmeeinrichtung und die Befestigungseinrichtung als Rotor ausgebildet sind, die hierdurch relativ gegenüber dem Stator rotierbar sind, und die Aufnahmeeinrichtung und/oder die Befestigungseinrichtung mittels einer elektrischen Kontakteinrichtung mit dem Stator elektrisch leitend verbindbar sind, wobei die Befestigungseinrichtung des Rotors zur Anbringung an der Anschlußeinrichtung des Roboters ausgebildet ist, und durch die Anbringung an der Anschlußeinrichtung des Roboters eine Drehachse des Rotors mit der Drehachse der Anschlußeinrichtung des Roboters zumindest im wesentlichen fluchtet und der Rotor um die Drehachse sowie um den Stator drehbar ist.

Es kann ferner bevorzugt sein, wenn bei einer erfindungsgemäßen Lichtbogenschweißbrennereinrichtung eine entlang der Drehachse des Rotors verlaufende Ausnehmung vorgesehen ist, welche bezüglich der Drehachse zentrisch (fluchtend) sowohl durch die Befestigungseinrichtung als auch durch die Aufnahmeeinrichtung verläuft, wobei sowohl eine Eingangsöffnung der Ausnehmung im Stator als auch eine Ausgangsöffnung der Ausnehmung im Rotor bezüglich der Drehachse ebenfalls zentrisch und damit fluchtend angeordnet sind. Bei dieser besonders bevorzugten Lösung für Hohlwellenroboter befindet sich somit die Eingangsöffnung im Lichtbogenschweißbrenner für vom Schweißkabel kommende Schweißmedien entlang der Rotationsachse des Lichtbogenschweißbrenners. Ebenso befindet sich die Ausgangsöffnung für einen Austritt von Schweißmedien aus dem Rotor heraus und deren Übertritt in den Schweißbrennerhals, ebenfalls fluchtend mit der Rotationsachse des Rotors. Vorzugsweise verläuft somit die gesamte Ausnehmung entlang der Rotationsachse des Rotors und damit auch der roboterseitigen Anschlußeinrichtung, mit welcher Rotationsbewegungen des Rotors um den Stator erzeugt und vom Roboter auf den Rotor übertragen werden.

In einer solchen bevorzugten Ausführungsform der Erfindung kann somit der Schweißdraht am drahtvorschubseitigen Ende in die Lichtbogenschweißbrennereinrichtung eingeführt und durch die Drahtseele bis zum prozeßseitigen Ende des Lichtbogenschweißbrenners durchgeführt sein. Während des Einsatzes der Lichtbogenschweißbrennereinrichtung wird aufgrund der im Prozeßbereich abschmelzenden Schweißdrahtspitze der Schweißdraht nachgeschoben. Der Schweißdraht wird hierdurch durch die gesamte Lichtbogenschweißbrennervorrichtung und somit auch durch den Anschlußflansch des Hohlwellenroboters für den Lichtbogenschweißbrenner und durch dessen Stator längsbewegt. Zum Austausch der Drahtseele und ihrer Baugruppe, muß vorzugsweise der Lichtbogenschweißbrenner lediglich im Bereich seines prozeßseitigen Endes insoweit geringfügig demontiert werden, dass hier ein Zugriff auf das prozeßseitige Ende der Drahtseele besteht, die dann händisch vollständig aus dem Lichtbogenschweißbrenner und dessen prozeßseitigen Ende herausgezogen werden kann. Die Lichtbogenschweißbrennereinrichtung bleibt hierbei am Anschlußflansch des Hohlwellenroboters unverändert montiert und die verschlissene als auch die neue Drahtseele sowie die jeweils dazugehörenden Baugruppen, vorzugsweise einschließlich des Positionssignalisationsmittels und/oder vorzugsweise des Knickschutzmittels, werden hierbei im Inneren des Lichtbogenschweißbrenners und damit durch den Anschlußflansch bewegt. Der Austausch der Drahtseele kann somit auch bei einem Hohlwellenroboter äusserst schnell und mit wenig Aufwand funktionssicher durchgeführt werden.

Im Zusammenhang mit einer einstückigen Ausbildung eines Bauteils, welches das Führungselement zur Aufnahme eines Endes der Drahtseele, sowie einen Abschnitt umfasst, in welchen der Schweißdraht drahtvorschubseitig in die Lichtbogenschweißbrennereinrichtung eintritt, können sich besondere Vorteile beim Einsatz einer Lichtbogenschweißbrennereinrichtung an einem Hohlwellenroboter ergeben. Sowohl die Drahtseele als auch die Komponente der Lichtbogenschweißbrennereinrichtung, in welcher der von der Drahtvorschubeinrichtung kommende Schweißdraht zuerst in den Lichtbogenschweißbrennereinrichtung eintritt, sind aufgrund der Relativbewegung des Schweißdrahts in diesen Komponenten, Verschleißteile und müssen deshalb von Zeit zu Zeit ausgetauscht werden. Da bei der erfindungsgemäßen Lösung die Drahtseele und das ein Ende der Drahtseele aufnehmende Führungselement verschleißbedingt ausgetauscht werden müssen, ist es von großem Vorteil, wenn das Führungselement und das mit der Eintrittsöffnung für den Schweißdraht und einer Durchgangsausnehmung für letzteren versehene Bauteil einstückig ausgebildet sind und somit gemeinsam zum Austausch am prozeßseitigen Ende aus der Lichtbogenschweißbrennereinrichtung herausgezogen werden. Dies verhindert, dass bei einer mehrteiligen Ausgestaltung der hier in Rede stehenden Komponenten die Lichtbogenschweißbrennereinrichtung auch am drahtvorschubseitigen Ende demontiert werden muß, um das Bauteil verschleißbedingt zu tauschen, welches den Schweißdraht bei Eintritt in die Lichtbogenschweißbrennereinrichtung aufnimmt. Dieses Bauteil kann vorzugsweise ein Knickschutzmittel sein, das mit Vorteil einstückig mit der Aufnahme für das Ende der Drahtseele ausgebildet ist.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: ein bevorzugtes Ausführungsbeispiel einer erfindungsgemäßen Lichtbogenschweißbrennereinrichtung zusammen mit einer Drahtvorschubeinrichtung;
- Fig. 2: eine geschnittene Ausschnittsdarstellung eines hinteren Endbereichs der Lichtbogenschweißbrennereinrichtung aus Fig. 1;
- Fig. 3: eine explosionsartige Darstellung des Ausschnitts aus Fig. 2;
- Fig. 4: eine geschnittene Ausschnittsdarstellung eines hinteren Endbereichs eines weiteren Ausführungsbeispiels einer erfindungsgemäßen Lichtbogenschweißbrennereinrichtung;
- Fig. 5: eine explosionsartige Darstellung des Ausschnitts aus Fig. 4;
- Fig. 6: eine stark schematisierte Darstellung eines als Schweißroboter vorgesehenen Knickarmroboters;
- Fig. 7: eine stark schematisierte prinzipielle geschnittene Darstellung einer Ausführungsform eines Schweißbrenners einer Lichtbogenschwei ßbrennereinrichtung;
- Fig. 8: eine detailiertere Darstellung der Schweißbrennervorrichtung von Fig. 7;
- Fig. 9: ein Stator der Schweißbrennervorrichtung aus Fig. 8 zusammen mit einer Schleifkontakteinrichtung in einer Schnittdarstellung;
- Fig. 10: eine Seitenansicht der Baugruppe von Fig. 9;
- Fig. 11: eine Ausführungsform eines geeigneten Knickarmroboters;
- Fig. 12: eine vergrößerte Detaildarstellung gemäß der Linie A aus Fig. 11.
- Fig. 13: eine Querschnittsdarstellung der Schleifkontakteinrichtung aus Fig. 10;

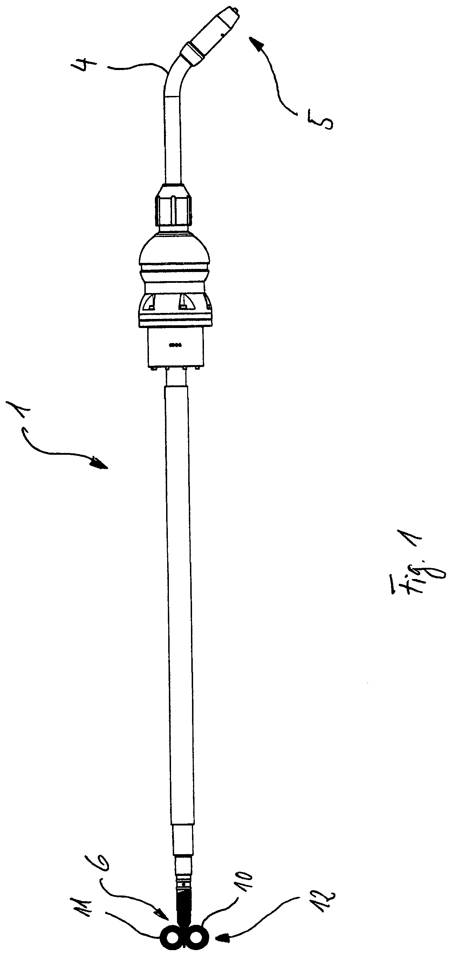

In Fig. 1 ist eine bevorzugte Ausführungsform einer erfindungsgemäßen LichtbogenSchweißbrennereinrichtung 1 dargestellt. Die Lichtbogenschweißbrennereinrichtung 1 ist zur Verwendung in einem Schweißautomaten, wie beispielsweise einem nicht näher dargestellten Schweißroboter, vorgesehen. Die Lichtbogenschweißbrennereinrichtung 1 ist hierbei an einem nicht näher dargestellten Endmanipulator des Roboters angeordnet, der in verschiedenen Raumrichtungen, vorzugsweise in sämtlichen Raumrichtungen auf beliebigen Vorschubwegen bewegbar ist. Der Endmanipulator kann hierdurch den Lichtbogen-Schweißbrenner 1 auf seinem Vorschubweg mitführen und der Lichtbogen-Schweißbrenner 1 an Werkstücken Schweißnähte ausführen. Der Lichtbogen-Schweißbrenner kann hierbei vorzugsweise in prinzipiell gleicher Weise ausgebildet sein, wie der in der WO 2005/049259 A1 offenbarte und beschriebene Lichtbogen-Schweißbrenner, wobei Unterschiede hinsichtlich des Endbereichs des Lichtbogen-Schweißbrenners aus Fig. 1 vorhanden sind, auf die nachfolgend eingegangen wird. Durch die nicht zwingend notwendige, jedoch besonders bevorzugte Ausführungsform des Lichtbogen-Schweißbrenners 1, wonach dieser einen außenliegenden Statorteil und einen innenliegenden Rotorteil aufweist und eine Zuführung und Versorgung der Schweißstelle mit Schweißmedien zumindest im wesentlichen entlang einer und koaxial zu einer Rotationslängsachse 3 der Lichtbogenschweißbrennereinrichtung und des Endmanipulators erfolgt, kann eine Endlosrotationsmöglichkeit des Schweißbrenners erreicht und eine Verdrillung eines Schweißkabels bei Rotationsbewegungen vermieden werden. Es wird explizit darauf hingewiesen, dass der hier gezeigte und erörterte Lichtbogen-Schweißbrenner lediglich beispielhaft für die Erfindung angeführt ist und die Erfindung grundsätzlich auch im Zusammenhang mit anderen Typen von Lichtbogenschweißbrennern und insbesondere auch mit Lichtbogenschweißbrennereinrichtung zum Einsatz kommen kann, deren konkreter Aufbau vom Aufbau der nachfolgend erörterten Lichtbogenschweißbrennereinrichtung abweicht.

Beim lediglich beispielhaft für die Erfindung dargestellten Lichtbogenschweißbrennereinrichtung 1 handelt es sich um einen nach dem Metall-Schutzgas Schweißverfahren arbeitenden Schweißbrenner 1. Bei diesem wird ein beim Schweißprozeß abschmelzender Schweißdraht 7 der vorgesehenen Schweißstelle zu- und aufgrund des Verbrauchs des Schweißdrahts 7 während eines Schweißprozesses kontinuierlich nachgeführt. Der Schweißdraht 7 wird hierbei in der Regel zusammen mit seiner Drahtseele 8a und vorzugsweise einer den Schweißdraht umgebenden Isolierung durch das Innere des Schweißbrenners 1, meistens durch ein Mantelrohr 2, zugeführt. Zusätzlich wird ein Schutzgas der Schweißstelle zugeführt, in der Regel ebenfalls durch das Mantelrohr 2. Im Ausführungsbeispiel ist das Schutzgas ein Inertgas, in anderen erfindungsgemäßen Ausführungsbeispielen kann als Schutzgas auch ein Aktivgas - oder eine Mischform von beiden - zugeführt werden. Im bevorzugten Ausführungsbeispiel wird zudem im Bereich des hinteren freien Endes 6 der Lichtbogenschweißbrennereinrichtung Strom in die Lichtbogenschweißbrennereinrichtung 1 eingeleitet und durch die Lichtbogenschweißbrennereinrichtung zur Schweiß- bzw. Prozeßstelle geleitet, der dazu genutzt wird, an der Schweißstelle bzw im Bereich des schweißprozeßseitigen Endes 5 der Lichtbogenschweißbrennereinrichtung, einen Lichtbogen zu zünden und für den Schweißvorgang aufrecht zu erhalten. Die Lichtbogenschweißbrennereinrichtung 1 ist deshalb in ihrem Einsatz mit einer nicht dargestellten Schweißstromquelle und einem Drahtvorschubmittel 12 verbunden bzw versehen. In bevorzugten Ausführungsbeispielen können sowohl der Schweißdraht, als auch das Schutzgas und der Strom über ein an sich bekanntes Schweißkabel, insbesondere ein Koaxialschweißkabel, dem Lichtbogenschweißbrenner an seiner Stromanschlußstelle zugeführt werden. An einer Gasanschlußstelle der Lichtbogenschweißbrennereinrichtung 1 wird das Schutzgas in eine Durchleitung 9 des Schweißbrenners 1 in dessen Inneres zur Durchführung des Schutzgases von der Anschlußstelle zum freien Ende an die Schweißstelle, eingeleitet. Der Strom wird ebenso vom Schweißkabel durch den Schweißbrenner 1 zur Schweiß- bzw. Prozeßstelle geleitet. Auch der Strom wird im Inneren des Schweißbrenners zur Prozeßstelle geleitet und zwar in einer Weise, in welcher eine Außenseite der Lichtbogenschweißbrennereinrichtung 1 stromfrei ist.

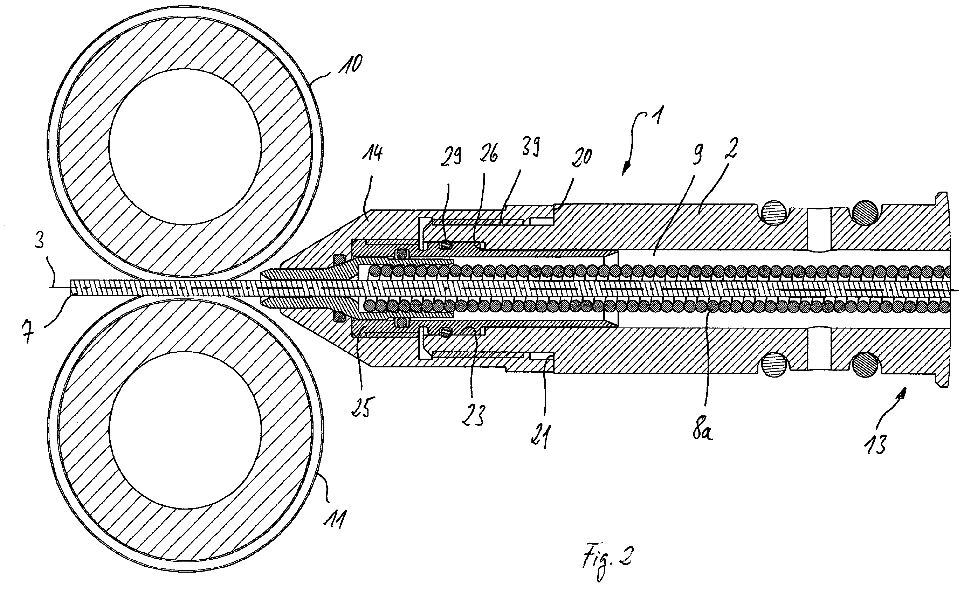

Die Lichtbogeschweißbrennereinrichtung 1 weist somit einen Brennerhals 4 auf, der mit einem Schlauchpaket 2 verbunden ist. Das Schlauchpaket 2 verläuft in etwa vom hinteren Ende 6 der Lichtbogenschweißbrennereinrichtung 1 bis zum Schweißbrenner am vorderen schweißprozeßseitigen Ende 5. Im Bereich des hinteren Endes 6, das in Fig. 2 gezeigt ist, sind im Inneren des Lichtbogenschweißbrenners 1 mehrere austauschbare Verschleißteile angeordnet, auf die nachfolgend näher eingegangen wird.

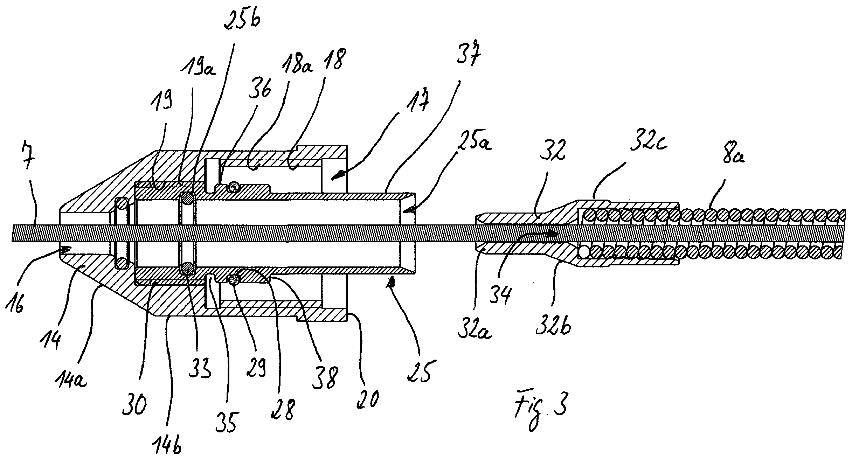

In Fig. 2 ist in einer Ausschnittsdarstellung das der Schweißprozeßstelle und dem dazugehörenden vorderen offenen Ende 5 der Lichtbogenschweißbrennereinrichtung 1 abgewandten hinteren Ende 6 des Lichtbogenschweißbrennereinrichtung 1 zusammen mit zwei Antriebsrollen 10, 11 einer Drahtvorschubeinrichtung 12 dargestellt. In dieser Darstellung ist der Schweißdraht 7 zwischen den beiden mit ihren Umfangsflächen sich gegenüberliegenden Antriebsrollen 10, 11 gezeigt. Die Antriebsrollen 10, 11 befinden sich unmittelbar gegenüber dem der Prozeßstelle des Lichtbogenschweißbrenners 1 abgewandten hinteren Ende 6 der Lichtbogenschweißbrennereinrichtung 1. Dieses stirnseitige Ende 6 des näherungsweise röhrenförmigen Mantelrohrs schließt mit einer Endkappe 14 ab, die entlang der zentrischen Achse 3 des Gehäuses 14 eine zum stirnseitigen äußeren Ende der Endkappe 14 hin offene Durchgangsbohrung 16 (Fig. 3) aufweist. Die Endkappe 14 ist zum prozeßseitigen Ende der Lichtbogenschweißbrennereinrichtung hin offen und von dort, in Richtung zur offenen Durchgangsbohrung 16 mit einer gestuften zentrischen Ausnehmung 17 versehen. Letztere weist zunächst einen konstanten größeren Durchmesser 18 auf, der in einen im Vergleich hierzu konstanten kleineren Durchmesser 19 der Ausnehmung übergeht. Letzterer Bereich wiederum geht in die Durchgangsbohrung 16 über. Die innere Umfangsfläche des Bereichs des kleineren Durchmessers 19 ist mit einem Innengewinde 19a versehen. Ebenso weist auch die innere Umfangsfläche des Bereichs des größeren Durchmessers 18 ein Innengewinde 18a auf. Letzteres reicht bis kurz vor den Übergang zum kleineren Durchmesser 19.

Die Außen- bzw Mantelfläche der Endkappe 14 weist einen sich vom Ende in Richtung zur Prozeßstelle hin konisch erweiternden Abschnitt 14a auf, der in einen Abschnitt 14b der Mantelfläche mit konstantem Durchmesser übergeht. Mit seiner zur Prozeßstelle weisenden Stirnseite 20 stößt die Endkappe 14 an einen äußeren Absatz 21 des Mantelrohrs 2 des Lichtbogen-Schweißbrenners 1. Das Mantelrohr 2 ragt in den Bereich des größeren Innendurchmessers 18 der Endkappe 14 bis kurz vor dem Übergang zum kleineren Durchmesser 19 hinein. Ein innerer Durchmesser 23 einer Durchgangsausnehmung des Mantelrohrs 2 im Bereich von dessen stirnseitigem Ende entspricht dem kleineren Durchmesser 19 der Ausnehmung 17 der Endkappe 14. so dass ein hülsenförmiger Einlaufkörper 25 mit seiner äußeren Mantelfläche zumindest im wesentlichen formschlüssig im Mantelrohr 2 aufgenommen werden kann. Zur Positionssicherung des hülsenförmigen Einlaufkörpers 25 in axialer Richtung weist die Durchgangsausnehmung 24 des Mantelrohrs 2 einen Absatz 26 zu einem kleineren Innendurchmesser auf, wobei der Absatz als Anschlag für den Einlaufkörper 25 vorgesehen ist.

Im Bereich des Mantelrohrs 2 ist an der Außenfläche bzw an der äußeren Mantelfläche des hülsenförmigen Einlaufkörpers 25 ein Einstich 28 bzw eine radial umlaufende Nut ausgebildet, die zur Aufnahme eines Dichtelements 29 oder Dichtmittels, wie insbesondere ein O-Ring, vorgesehen ist. Ein Abschnitt der Außenfläche des Einlaufkörpers 25, der sich gegenüber dem kleineren Durchmesser 19 der Ausnehmung der Endkappe 14 befindet, ist mit einem Außengewinde 30 versehen, welches in das Innengewindes 19a der zylindrischen Umfangsfläche des Abschnitts mit dem kleineren Durchmesser 19 der Ausnehmung 17 der Endkappe 14 einschraubbar ist.

Der hülsenförmige Einlaufkörper 25 ist mit einer Durchgangsausnehmung 25a ausgebildet, die mit einem durchgängig konstanten Innendurchmesser versehen ist. Lediglich im Bereich, in dem in der Durchgangsausnehmung 25a des Einlaufkörpers 25 sich ein mit dem Einlaufkörper vorzugsweise verbindungslos angeordnetes Führungselement 32 befindet, weist die Ausnehmung 25a einen Einstich 25b oder Nut zur Anordnung eines Dichtelements 33 oder Dichtmittels, wie insbesondere einen O-Ring auf. Das in der Nut 25b des Einlaufkörpers 25 angeordnete Dichtelement hat somit Kontakt mit der äußeren Mantelfläche des Führungskörpers 32.

Der Einlaufkörper 25 weist eine äußere Mantelfläche mit unterschiedlichen Abschnitten auf, die sich vor allem in der Größe der Außendurchmesser voneinander unterscheiden. Im gezeigten Ausführungsbeispiel weist ein erster, dem hinteren Ende des Lichbogenschweißbrenners nahen Abschnitt der äußeren Mantelfläche das Außengewinde 30 auf, mit welchem der Einlaufkörper 25 in das Innengewinde 19a der Endkappe 14 eingeschraubt und hierdurch mit der Endkappe 14 lösbar verbunden ist. In Richtung zum prozeßseitigen Ende 5 der Lichtbogenschweißbrennereinrichtung 1 hin, schließt sich an das Außengewinde 30 ein Einstich 35 an, an den sich wiederum ein gewindeloser Abschnitt 36 der äußeren Mantelfläche anschließt, welcher den gleichen Außendurchmesser aufweist, wie der Gewindeabschnitt 30. Der gewindelose Abschnitt 36 weist die umlaufende Nut 28 auf, in die das weitere Dichtelement 29 aufgenommen werden kann, im Fall des dargestellten Ausführungsbeispiels ein O-Ring.

In Richtung zum prozeßseitigen Ende 5 schließt sich dann ein weiterer, letzter, Abschnitt 37 der äußeren Mantelfäche des Einlaufkörpers 25 an, welcher ebenfalls einen konstanten, aber geringeren Außendurchmesser als der vorangehende Abschnitt aufweist. Durch den mittels der Durchmesseränderung ausgebildeten Absatz 38 zwischen dem letzten Abschnitt 37 der äußeren Mantelfläche und dem diesen vorausgehenden Abschnitt 36, ergibt sich am Einlaufkörper eine Einschub- bzw. eine Eindrehbegrenzung für das Mantelrohr 2.

Das Mantelrohr 2 wiederum weist im Bereich seines vorderen Endes an seiner äußeren Mantelfläche ein Außengewinde 39 auf, auf welches die Endkappe 14 mit ihrem Innengewinde 18a aufgeschraubt ist. Die Einschraubbewegung wird durch ein Anstossen der Stirnseite 20 der Endkappe 14 am Absatz 21 des Mantelrohrs begrenzt. Das Erreichen dieser Position kann eine optische Kontrollmöglichkeit darstellen, dass die Endkappe korrekt montiert und verschraubt ist.

In Fig. 3 ist das drahtvorschubseitige bzw hintere Ende 6 der Lichtbogenschweißbrennereinrichtung 1 in einer explosionsartigen Darstellung und Situation gezeigt, wie sie sich auch beim Wechseln der Drahtseele 8a ergibt. Wie hier zu erkennen ist, ist im Betrieb der Lichtbogenschweißbrennereinrichtung 1 der Einlaufkörper 25 in die Endkappe 14 eingeschraubt. Ebenso sind sämtliche Dichtungen in ihren Nuten eingesetzt und verbleiben auch während des Wechselns der Drahtseele dort. In der Darstellung von Fig. 3 ist das Mantelrohr 2 nicht dargestellt, das auch während des Wechsels der Drahtseele 8a unverändert mit der Endkappe 14 durch deren gemeinsame Schraubverbindung verbunden ist und verbunden bleibt. Um die Drahtseele 8a zu wechseln, wird zunächst der Lichtbogenschweißbrenner am prozeßseitigen Ende 5 insoweit demontiert, dass die Drahtseele 8a und das Führungselement 32 gemeinsam aus dem prozeßseitigen Ende 5 herausgezogen werden können. Bei einem aktuellen Lichtbogenschweißbrenner der Anmelderin, in welche die hier beschriebene Erfindung zukünftig integriert werden soll, kann beispielsweise hierfür die Gasdüse, eine Stromkontaktdüse und gegebenenfalls ein Düsenstock vom Lichtbogenschweißbrenner gelöst und vom Schweißdraht entfernt werden. Anschließend kann die Drahtseele 8a vom prozeßseitigen Ende 5 aus dem Lichtbogenschweißbrenner herausgezogen werden. Hierbei wird auch der auf der Drahtseele 8a sitzende und mit letzterer durch eine Presspassung verbundene Führungskörper 32, zusammen mit der Drahtseele, aus der Lichtbogenschweißbrennereinrichtung 1 herausgezogen. Das in der Ausnehmung der Endkappe und der Ausnehmung des Einlaufkörpers in diesem Ausführungsbeispiel weitestgehend verbindungslos mit den beiden Bauteilen sitzende Führungselement kann somit ohne zusätzlichen Aufwand, insbesondere auch ohne grösseren Kraftaufwand, aus den beiden Bauteilen sowie aus dem Lichtbogenschweißbrenner 1 zusammen mit der Drahtseele 8a herausgezogen werden. Es ist beim Herausziehen dieser Baugruppe lediglich eine durch eine O-Ringdichtung auf die Mantelfläche des Führungselements wirkende, vergleichsweise geringe Haltekraft zu überwinden.

Anschliessend kann eine neue Drahtseele 8a mit einem seiner beiden Enden auf dem Schweissdraht 7 angeordnet sowie in den Führungskörper 32 eingeführt und angeordnet werden. Danach kann der Führungskörper 32 zusammen mit der Drahtseele 8a gemeinsam und in einem einzigen Vorgang auf dem Schweißdraht 7 in den Schweißbrenner und damit auch in die Lichtbogenschweißbrennereinrichtung 1 eingeschoben werden. Diese Einführbewegung in Richtung auf die Endkappe 14 zu, wird solange fortgeführt bis der Führungskörper 32 mit seinem endkappenseitigen und als Positionsanzeigemittel dienende Ende 32a vollständig durch die offene Durchgangsausnehmung 16 der Endkappe 14 geführt ist und das Ende 32a des Führungselements 32 nach außen aus der Endkappe 14 herausragt. Durch das außerhalb der Lichtbogenschweißbrennereinrichtung 1 mit einem seiner Enden 32a angeordneten und optisch erkennbaren Ende des Führungselements 32 ist eine Kontrollmöglichkeit gegeben, um ohne zusätzlichen technischen Aufwand erkennen zu können, ob der Führungskörper 32 und die Drahtseele 8a innerhalb der Lichtbogenschweißbrennereinrichtung 1 in ihren vorbestimmten Sollpositionen angeordnet sind. Da nur in ihren Sollpositionen auch eine Abdichtung durch den Führungskörper 32 gegen eine Leckage des in der Lichtbogenschweißbrennereinrichtung fließenden Schutzgases gegeben ist, stellt das außerhalb der Endkappe 14 sichtbare Ende 32a des Bauteils des Führungskörpers 32 auch eine Kontrolle dar, ob die neu eingeführte Drahtseele 8a und deren Führungskörper 32 derart angeordnet sind, dass der Lichtbogenschweißbrenner 1 gegen ein Entweichen von Schutzgas aus dem endkappenseitigen Ende 6 des Lichtbogenschweißbrenners 1 abgedichtet ist.

Das Bauteil des Führungskörpers 32 weist den in seiner Gebrauchsposition am Lichtbogenschweißbrenner 1 zur Drahtvorschubeinrichtung weisenden zylindrischen Endbereichsabschnitt 32a auf, der im Ausführungsbeispiel längserstreckt ist und einen konstanten Außendurchmesser aufweist. Der Endbereichsabschnitts 32a geht in einen sich zum prozeßseitigen Ende 5 hin konisch vergrößernden Abschnitt 32b über, an den sich wiederum ein zylindrischer Abschnitt 32c mit größerem, vorzugsweise konstantem, Außendurchmesser anschließt. Im Ausführungsbeispiel der Fig. 2 und 3 weist der Abschnitt 32c einen Absatz zu einem leicht verringerten Außendurchmesser auf. Beim Einschub in die Lichtbogenschweißbrennereinrichtung 1 wird der Führungskörper 32 mit seinem Endbereich 32a voraus in den Einlaufkörper 25 eingeführt. Da ein in Einschubrichtung vorderer Außendurchmesser des Abschnitts 32c in etwa dem Innendurchmesser der Durchgangsausnehmung 25a des Einlaufkörpers 25 entspricht, wird der Führungskörper bei seiner Vorschubbewegung innerhalb des Einlaufkörpers geführt. Hierdurch ist auch der Endbereichsabschnitt 32a lagekorrekt ausgerichtet und hierbei konzentrisch um die Längsachse 3 angeordnet und kann in die Durchgangsausnehmung 16 der Endkappe 14 eingeführt werden. Da der Endbereichsabschnitt 32a einen konstanten Außendurchmesser aufweist, der nur geringfügig geringer ist, als der Durchmesser der Durchgangsausnehmung 16 kann der Endbereichsabschnitt 32a vollständig in die Durchgangsausnehmung eingeführt und ein Teil des Endbereichsabschnitts 32a aus der Durchgangsausnehmung 16 der Endkappe nach außen herausgeführt werden. Dieser Teil des Endbereichsabschnitts, der als Positionsanzeigemittel bezeichnet werden kann, ist somit in seiner Endposition im Schweißbrenner 1 von außen erkennbar und befindet sich vergleichsweise nahe zur Angriffsstelle der Drahtvorschubeinrichtung, an welcher die Vorschubbewegung auf den Schweißdraht 7 aufgebracht wird. Dieses Positionsanzeigemittel kann zur von außen optisch wahrnehmbaren Signalisation einer positionsgerechten Anordnung des Führungskörpers und der Drahtseele 8a im Inneren des Lichtbogenschweißbrenners dienen.

Das einstückige Bauteil des Führungskörpers 32 ist mit einer Durchgangsausnehmung 34 versehen, die im Bereich des Endbereichsabschnitts 32a einen vorzugsweise konstanten Durchmesser aufweist, der nur geringfügig größer ist, als der Durchmesser des in diesem Fall benutzten Schweißdrahts. Im Bereich des Abschnitts 32c mit dem größeren Außendurchmesser weist die Durchgangsausnehmung 34 einen größeren, aber ebenfalls konstanten Durchmesser auf, wodurch in diesem Bereich der Durchgangsbohrung das hintere Ende der Drahtseele 8a angeordnet werden kann. Der Innendurchmesser der Ausnehmung 34 in diesem Bereich entspricht in etwa dem Außendurchmesser der Drahtseele. Mit seinem stirnseitigen Ende stößt die Drahtseele 8a an den sich durch die Durchmesseränderung in der Durchgangsausnehmung 34 ergebenden Absatz 34a an. Durch die Einstückigkeit des Führungskörpers 32 ergeben sich gute Führungseigenschaften für den Schweißdraht im Führungskörper 32, mit einer höchstens geringen Gefahr, dass der Schweißdraht 7 bei seiner Bewegung sich verhakt und dadurch ausknickt.

Zur Vermeidung eines Verhakens des Schweißdrahts 7 am bzw im Führungskörper 25 während der Vorschubbewegung und zur erleichterten Einführung eines Schweißdrahtendes in den Führungskörpers 25 kann eine Anfasung der Öffnung der Durchgangsausnehmung 34 im Bereich der Stirnseite des Endbereichs 32a des Führungskörpers beitragen.

Es kann ferner vorgesehen sein, für unterschiedliche Schweißdrähte unterschiedliche Führungselemente 32 mit unterschiedlichen Durchmessern der Durchgangsausnehmung 34 vorzusehen. Ein solches System kann insbesondere in ihrer geometrischen Außenform identische Führungskörper aufweisen, die sich aber hinsichtlich der Durchmesser der jeweiligen Durchgangsausnehmung 34 sowie gegebenenfalls auch hinsichtlich der verwendeten Werkstoffe der Führungselemente unterscheiden, wodurch auch in vorteilhafter Weise eine Anpassung an den jeweiligen Werkstoff des Schweißdrahts stattfinden kann.

Das aus der Endkappe 14 herausragende Ende 32a des Bauteils des Führungselement 32, in welchem der Schweißdraht 7 geführt ist, verkürzt zudem die freie und ungeführte Länge des Schweißdrahts zwischen der Drahtvorschubeinrichtung und der Lichtbogenschweißbrennereinrichtung 1. Auch durch den geringeren Außendurchmesser des Endes des Bauteils des Führungselements 32 im Vergleich zum stirnseitigen Ende der Endkappe, kann das aus der Lichtbogenschweißbrennereinrichtung hinausragende Bauteil des Führungselements näher zur Kontaktstelle des Schweißdrahts mit den beiden Vorschubrollen der Drahtvorschubeinrichtung angeordnet werden. Der Schweißdraht wird somit früher durch das Bauteil des Führungselements aufgenommen und von diesem geführt, was die Gefahr eines Ausknickens des Schweißdrahts verringert. Der Abschnitt des Bauteils des Führungselements mit dem geringeren Außendurchmesser, welcher durch die Endkappe 14 geführt und aus dieser hinausragt, kann als Knickschutzmittel bezeichnet werden.

Durch die Erfindung ergibt sich zudem der Vorteil, daß anders als es bisher üblich war, die Endkappe 14 weder den Schweißdraht 7 noch die Drahtseele 8a führt oder berührt und damit die üblicherweise aufwendig gestaltete Endkappe 14 kein Verschleißteil mehr ist.

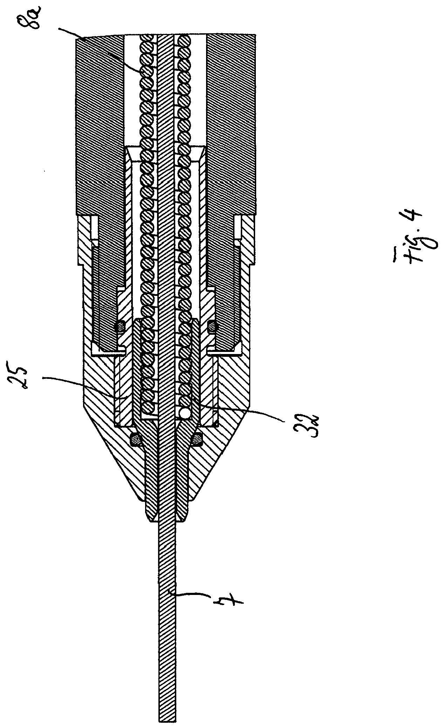

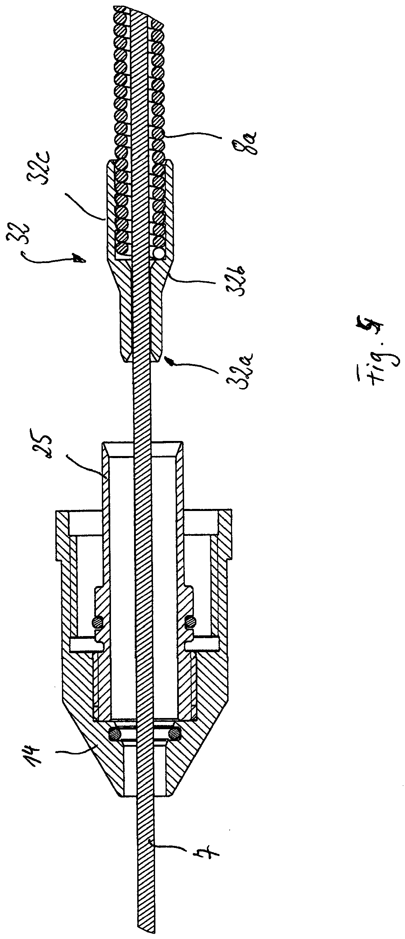

In den Darstellungen von Fig. 4 und 5 ist ein weiteres bevorzugtes Ausführungsbeispiel der Erfindung dargestellt. Dieses ist weitestgehend identisch mit dem bevorzugten Ausführungsbeispiel aus den Fig. 1 bis 3, weshalb zur Vermeidung von Wiederholungen nachfolgend lediglich auf die Unterschiede eingegangen wird. Die vorstehende Beschreibung zu den Fig. 1 bis 3 wird deshalb auch für das Ausführungsbeispiel der Fig. 4 und 5 durch Bezugnahme aufgenommen.

Der wesentliche Unterschied zum Ausführungsbeispiel einer Lichtbogenschweißbrennereinrichtung nach den Fig. 1-3 besteht darin, dass das Führungselement 32 nach seinem konischen Abschnitt 32b in Richtung zum prozeßseitigen Ende des Brenners gesehen, (nur) einen Abschnitt 32c mit einem größeren Durchmesser aufweist, welcher einen durchgehend konstanten Durchmesser hat. In diesem bevorzugten Ausführungsbeispiel ist somit im Anschluß an den konischen Abschnitt - und in Richtung zum prozessseitigen Ende gesehene - an der äußeren Mantelfläche des Führungselements keine Durchmesservergrößerung vorhanden, die für eine form- und/oder kraftschlüssiges Halten des Führungselements verwendet werden könnte. Zudem liegt bei dieser bevorzugten Ausführungsform kein Dichtelement, wie beispielsweise das Dichtelement 33 aus dem anderen Ausführungsbeispiel der Fig. 2 und 3, am äußeren Umfang des Abschnitts 32c mit konstantem Durchmesser an. Somit ist auch kein Dichtelement zwischen dem Einlaufkörper 25 und dem Führungselement 32 vorhanden, das auf das Führungselement 32 eine Haltekraft auf das Führungselement 32 ausüben könnte. Dies hat vor allem beim Wechsel der Drahtseele 8a einen Vorteil, da sich aufgrund der fehlenden Haltekraft auf das Führungselement 32, die Drahtseele und das Führungselement einfacher, d.h. mit weniger Kraftaufwand, aus der Lichtbogenschweißbrennereinrichtung in Richtung zum prozeßseitigen Ende hin entnehmen läßt. Da bei erfindungsgemäßen Lichtbogenschweißbrennereinrichtungen jedoch Signalisationsmittel vorhanden sind, mit welchen vorzugsweise während des gesamten Einsatzes des Lichtbogenschweißbrenners mit einer bestimmten Drahtseele deren positionsgerechte Anordnung mittels des Signalisationsmittel überprüft werden kann, sind zusätzliche Haltekräfte auch nicht zwingend erforderlich.

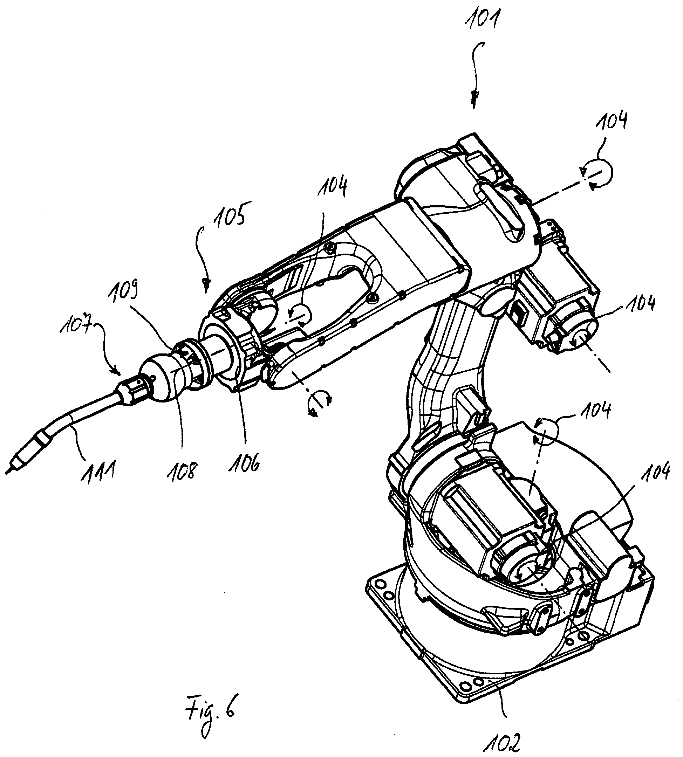

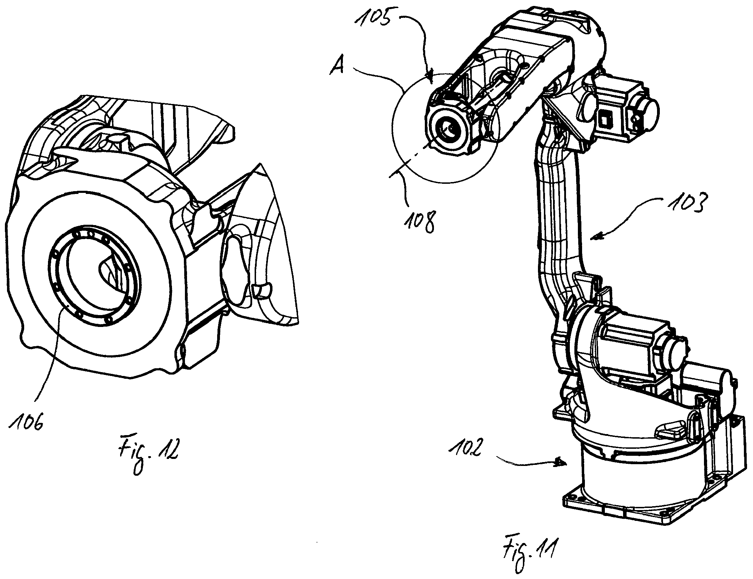

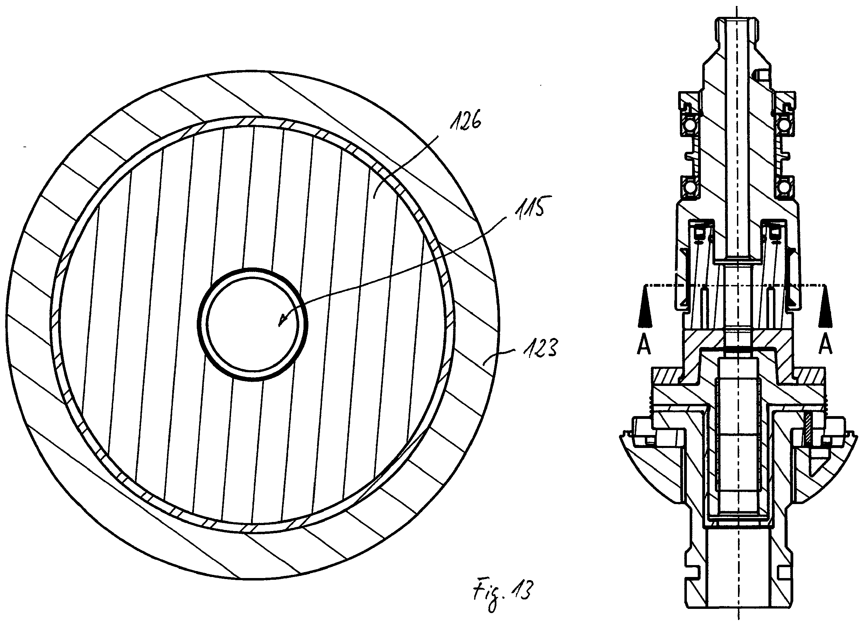

In den Fig. 6 - 13 ist unter anderem ein Knickarmroboter 101 dargestellt, wie er bereits in vielfacher Weise eingesetzt wird. Der Knickarmroboter 101 ist als sogenannter Hohlwellenroboter ausgeführt, der sich im Zusammenhang mit der Erfindung besonders eignet. Derartige geeignete Roboter können beispielsweise die Roboter der AR- oder MA-Serie sein, die von dem Unternehmen Yaskawa Europe GmbH, 65760 Eschborn, angeboten werden. Der Roboter weist ein Gestellteil 102 und einen daran angeordneten Arm 103 auf, der mit mehreren Gelenken 104 versehen ist. Das freie Ende 105 des Armes des Knickarmroboters 101 ist hierdurch in der Lage, beliebige dreidimensional verlaufende Bewegungsbahnen abzufahren.

Am freien Ende 105 des Armes 103 ist der Roboter mit einem Anschlußflansch 106 einer Anschlußeinrichtung versehen, der zur Aufnahme eines Schweißbrenners 107 (Fig. 6) der Lichtbogenschweißbrennereinrichtung vorgesehen ist. Der Anschlußflansch 106 kann um eine Rotationsachse 108 und relativ zum letzten Glied des Armes 103 eine motorisch angetriebene Rotationsbewegung ausführen. In Figur 6 ist ein Distanzblock vor den Brenner eingezeichnet, der als Verlängerung des Anschlussflansches 106 des Roboters dient und fakultativ und nicht zwingend vorgesehen sein kann.

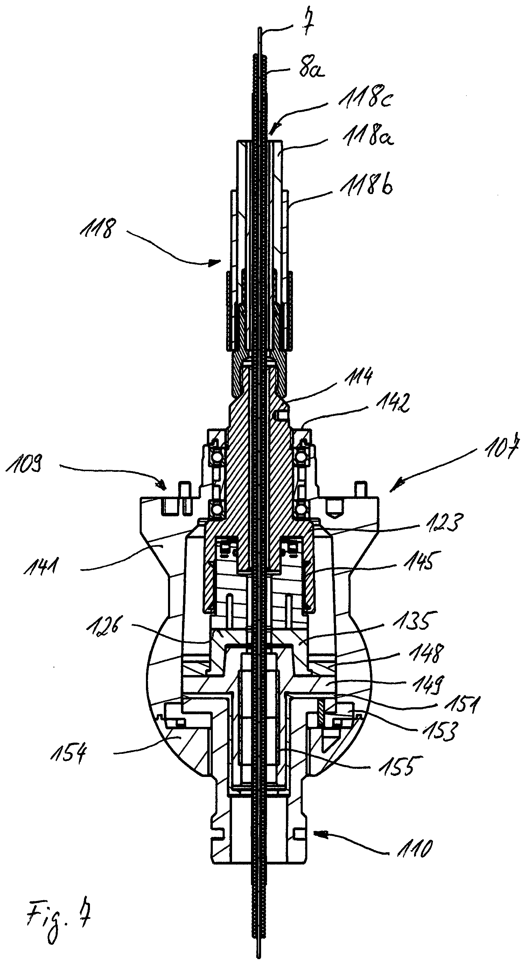

Der in den Figuren 7 bis 10 näher gezeigte Lichtbogenschweißbrenner 107 hat eine Befestigungseinrichtung 109 und eine Aufnahmeeinrichtung 110 (Fig. 7). Die Befestigungseinrichtung 109 ist dazu vorgesehen, den Schweißbrenner 107 mit dem Anschlußflansch 106 des Roboterarmes 103 lösbar, aber drehfest, zu verbinden. Die Aufnahmeeinrichtung 110 dient hingegen zusammen mit einer Kontakteinrichtung zur Aufnahme eines Schweißbrennerhalses 111 des Schweißbrenners 107 und zur nachfolgend noch näher erläuterten Übertragung des Schweißstromes auf den Schweißbrennerhals 111. Da die Aufnahmeeinrichtung 110 in einer nachfolgend noch näher erläuterten Weise über die Befestigungseinrichtung 109 drehfest mit dem Rotationsbewegungen ausführenden Anschlußflansch 106 des Roboters verbindbar ist, werden die Aufnahmeeinrichtung 110 und die Befestigungseinrichtung 109 auch gemeinsam als Teil eines Rotor bezeichnet, der mittels angetriebenen Bewegungen des Anschlußflanschs um die Rotationsachse 108, derartige Rotationsbewegungen ausführen kann. Der Rotor ist hierzu drehfest mit dem Anschlußflansch verbunden, insbesondere lösbar verbunden.

Bezogen auf das letzte Glied des Roboterarmes 103, an dem der Anschlußflansch 106 angebracht ist, ist der Rotor um die Achse 108 drehbar. Der in den Figuren dargestellte Roboter hat insgesamt sechs angetriebene Achsen, wobei diese Anzahl nur beispielhaft für die Einsatzmöglichkeiten des Lichtbogenschweißbrenners ist. Im Zusammenhang mit dem erfindungsgemäßen Lichtbogenschweißbrenner können auch Knickarmroboter mit einer anderen Anzahl an angetriebenen Bewegungsachsen zum Einsatz kommen.

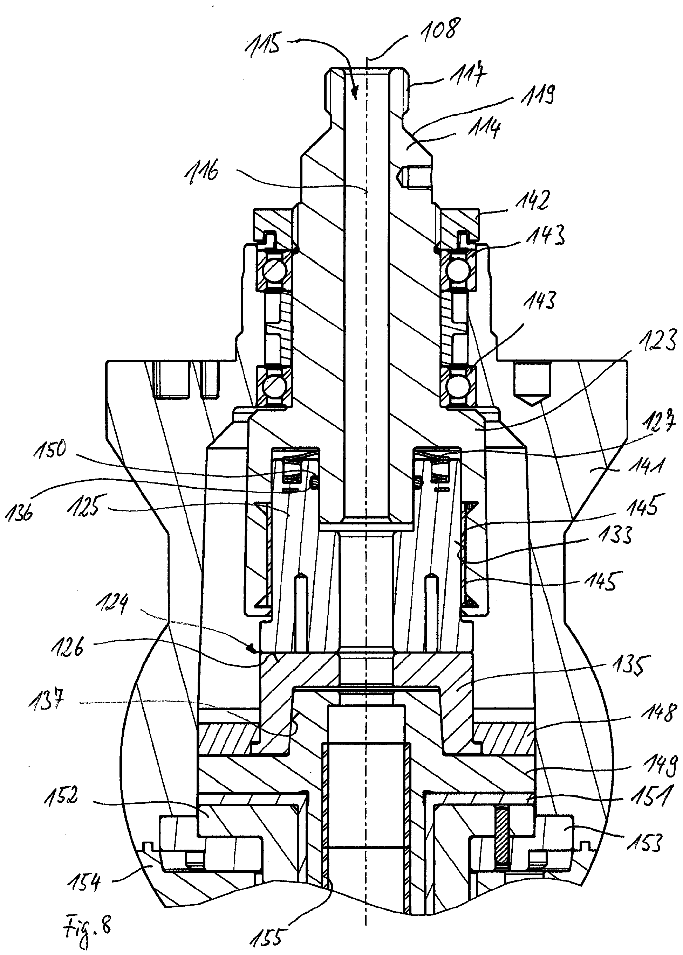

Ein gegenüber dem Rotor und dem letzten Glied des Roboterarmes 103 innenliegender und ortsfester Stator weist eine in der Schweißbrennervorrichtung mittig (zentrisch) angeordnete rohrförmige Durchführung 114 auf, die eine zylindrische Ausnehmung 115 hat. Eine Längsachse 116 der Ausnehmung 115 fluchtet mit der Rotationsachse 108 des Anschlußflansches 106. Die Durchführung 114 erstreckt sich etwa über die gesamte Länge der Befestigungs- und der Aufnahmeeinrichtung. Das obere roboterseitige Ende der Durchführung 114 ist mit einem als elektrischer Anschluß dienendem Außengewinde 117 versehen, auf das ein Koaxialkabel 118 (Fig. 6 und Fig. 7) durch aufschrauben lösbar befestigt werden kann. Zusätzlich zum Gewinde 117 der Durchführung kann auch ein Konus 119 (Fig. 8) als stromleitender Kontakt zwischen einem Schweißstromkabel 118a des Koaxialkabels 118 und der Durchführung 114 vorgesehen sein. Bei einem solchen Koaxialkabel 118 ist das mit einer Außenisolation 118b versehene Schweißstromkabel 118a koaxial um einen mittigen Kanal 118c angeordnet. Der mittige Kanal 118c kann dazu dienen den Schweißdraht 7 durch eine Vorschubbewegung dem Schweißbrenner zuzuführen und ein Schutzgas zum vorderen Ende des Schweißbrenners 107 fließen zu lassen.

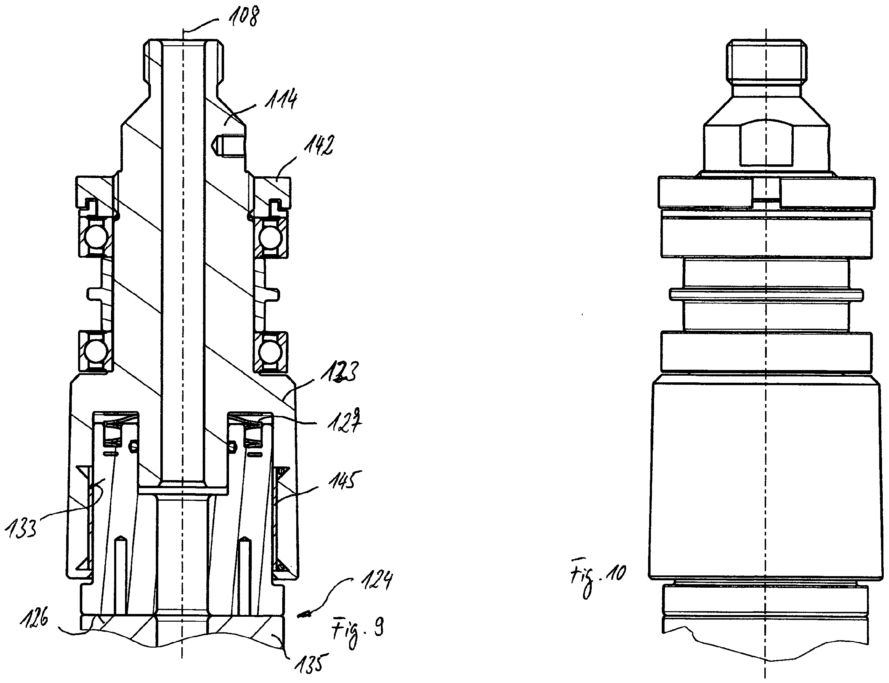

Im Bereich eines in der Darstellung unteren schweißbrennerseitigen Endes wird die Durchführung 114 von einem im Querschnitt kreisrunden glockenförmigen Abschnitt 123 (Fig. 8 und Fig. 9) des Stators umgeben, der mit der Durchführung elektrisch leitend verbunden ist. Im Ausführungsbeispiel sind der glockenförmige Abschnitt 123 und die Durchführung 114 einstückig verbunden. Im wesentlichen innerhalb des glockenförmigen Abschnitts 123 ist an der Durchführung 114 eine Kontakteinrichtung 124 angeordnet, die einen im glockenförmigen Abschnitt angeordneten Schleifring 125 aufweist. Die Kontakteinrichtung 124 weist eine am Schleifring 125 stirnseitig ausgebildete Schleiffläche 126 auf. Die Schleiffläche 126 ist zum einen von einer parallel zur Längsachse 116 der Durchführung 114 wirkenden Druckfeder 127 kraftbelastet. Die Druckfeder 127 stützt sich innenseitig am glockenförmigen Abschnitt 123 des Stators ab und drückt die Schleiffläche 126 gegen eine ebenfalls im wesentlichen ringförmige Fläche einer Anschlußglocke 135. Sowohl die ringförmige Fläche der Anschlußglocke 135 als auch die Schleiffläche 126 sind Bestandteile einer Kontakteinrichtung 124 und sind jeweils konzentrisch um die Längsachsen 108, 116 angeordnet und von einer Fortsetzung der Ausnehmung 115 durchdrungen.

Zwischen dem Schleifring 125 und einer Innenseite des glockenförmigen Abschnitts 123 befinden sich Kontaktlamellen 145, die den elektrischen Kontakt zwischen dem Schleifring 125 und dem glockenförmigen Abschnitt 123 herstellen. Die Federwirkung der Kontaktlamellen 145 bewirkt, dass ein elektrischer Kontakt zwischen dem Schleifring 125 und einer Innenfläche 133 des glockenförmigen Abschnitts 123 hergestellt wird. Als Werkstoff weist der Schleifring 125 einen guten elektrischen Leiter auf, beispielsweise Kupfer oder eine Kupferlegierung. Die Kontaktlamellen 145 können vorzugsweise entsprechend versilbert sein, um einen besonders guten elektrischen Stromübergang zu gewährleisten. Die der Druckfeder 127 abgewandte Seite des Schleifrings 125 mit seiner Schleiffläche 126 (Fig. 9) ist als feststehendes Bauteil und als Teil des Stators ausgebildet und wirkt als elektrischer Übergang auf den um die Längsachse 108 rotierbaren Rotor, zu dem die Anschlußglocke 135 gehört.

Somit schließt sich an den Schleifring 125 in Richtung der Längsachse 116 der Durchführung 114 und in Richtung auf das schweißbrennerseitige Ende hin die Anschlussglocke 135 (Fig. 8) an, die aufgrund einer vorzugsweise versilberten Oberfläche ebenfalls gut elektrisch leitend ist. Die Durchführung 114, der Schleifring 125 sowie die Anschlußglocke 135 weisen miteinander fluchtende zentrische Bohrungen auf, welche insgesamt Bestandteil einer entlang der Längsachse 108 verlaufenden zentrischen Ausnehmung 115 sind.

Die Druckfeder 127 drückt somit auf den Schleifring 125, der wiederum über seine Schleiffläche 126 auf die Anschlussglocke 135 drückt, und letztere daher ständig mit der Schleiffläche 126 in Kontakt, insbesondere in elektrisch leitendem Kontakt, steht. Die Anschlussglocke 135 ist in Bezug auf ihre axiale Position auf der Durchführung über einen Ring 148 zusätzlich gesichert. Des Weiteren ist die Anschlussglocke 135 über eine konische, versilberte Innenfläche mit der konischen Außenfläche des "Messingflansches mit Buchse" 149 gepaart und axial zentriert. Zudem befindet sich zwischen dem glockenförmigen Element 123 des Stators und dem Schleifring 125 in einer Nut 150 des Schleifrings 125 eine Dichtung 136, mit der sichergestellt werden kann, dass das glockenförmige Element 123 als Teil des Stators gasdicht auf dem Schleifring 125 sitzt.

Ein "Messingflansch mit Buchse" 149, der über einen Konus mit der vorzugsweise versilberten Anschlussglocke 135 gepaart ist, ist über eine Kunststoffisoliertülle 151 mit einem Befestigungselement 152, das Bestandteil der Befestigungseinrichtung ist und als Gegenstück für den Schweißbrenneranschluss dient, verschraubt.

Das Gehäuse 141, ein sich an eine Stirnseite des Gehäuses 141 anschließender Abschlußdeckel 142 und ein sich in Richtung zum Schweißbrennerhals 111 an die andere Stirnseite des Gehäuses 141 anschließender Deckel 154 sind im Ausführungsbeispiel als Kunststoffbauteile ausgebildet. Das Gehäuse 141 beinhaltet im Ausführungsbeispiel auch die Befestigungseinrichtung 109 zur Befestigung am Anschlussflansch 106 an einem Hohlwellenroboter und umschließt und isoliert zusammen mit dem Deckel 154 und dem Abschlußdeckel 142 den inneren Aufbau elektrisch. Die Aufnahmeeinrichtung 110 des Schweißbrenners ist zwar aus metallischem, elektrisch leitenden Werkstoff, jedoch ist diese über die Kunststofftülle 151 mit Flansch als Isolator ebenfalls von stromführenden Bauteilen getrennt. Die Aufnahmeeinrichtung 110 für den Schweißbrenner ist dementsprechend durch das Kunststoffgehäuse 141 und den Deckel 154 hindurchgeführt.

Die als Bestandteil des Kunststoffgehäuses 141 ausgeführte Befestigungseinrichtung 109 ist drehfest aber lösbar mit dem Anschlussflansch des Roboters 106 verbunden. Ebenfalls drehfest mit dem Kunstoffgehäuse 141 verbunden ist die Aufnahmeeinrichtung 110 für den Schweißbrenner, an dessen Befestigungselement 152 ein Schweißbrenner drehfest lösbar verbunden wird. Grundsätzlich ist somit das beim Schweißbrenner außenliegende Gehäuse 141 Bestandteil des Rotors des Lichtbogenschweißbrenners. Dieser Rotor ist konzentrisch zum innenliegenden Stator des Lichtbogenschweißbrenners und bezüglich der Rotationsachse 108 angeordnet und kann sich aufgrund von motorisch angetriebenen Rotationsbewegungen des Anschlußflanschs 106 des Roboters relativ zum innenliegenden Stator um letzteren drehen. Der Stator ist hingegen bei einer gemeinsamen Rotationsbewegungen des Rotors mit dem roboterseitigem Anschlußflansch 106 ortsfest und dreht sich hierbei nicht mit. Im Ausführungsbeispiel kann diese ortsfeste Anordnung bezüglich des Anschlußflanschs 106, der Befestigungseinrichtung 109 und des Rotors- insgesamt beispielsweise dadurch erreicht werden, dass das Schweißkabel am Gewinde 117 der Durchführung 114 befestigt ist und aufgrund der Torsionssteifigkeit des Schweißkabels in seiner rotativen Position fixiert ist. In anderen Ausführungsformen der Erfindung kann auch eine zusätzliche Drehsicherung des Stators am Roboter vorgesehen sein.

Hierdurch ist es möglich, eine rotative Antriebsbewegung des Anschlußflansches 106 des Roboters über das Kunststoffgehäuse 141, mit Hilfe eines im Gehäuse 141 angeordneten Befestigungsrings 153 und dem Befestigungselement 152 auf den Schweißbrenner zu übertragen. Der Stator führt diese Drehbewegung hingegen nicht aus, da er über das Koaxialkabel 118 - und gegebenenfalls über weitere Befestigungsmittel - am Roboterarm rotatorisch fixiert ist. Der Widerstand gegen Torsion, die derartige Kabel 118 aufweisen, kann jedoch bereits ausreichen, um den Stator zu fixieren, obwohl aufgrund von nicht ganz auszuschließenden Reibmomenten ein geringer Anteil des Drehmoments der Antriebsbewegung über die Lager 143 möglicherweise auf den Stator übertragen werden kann. Im dargestellten Ausführungsbeispiel weist der Stator zumindest die Bauteile die Durchführung 114 und den Schleifring 125 zusammen mit der Druckfeder 127 auf. Mittels Lager 143, hier im Ausführungsbeispiel Kugellager, ist der Rotor am Stator gelagert.

Das Kunststoffgehäuse 141 wird mit dem Deckel 154, der den Befestigungsring 153 verdeckt, zum Schweißbrenner hin verschlossen. Zum Schweißbrennerkabel hin wird das Gehäuse 141 mittels des Abschlußdeckels 142 abgedeckt. Soweit es erforderlich erscheint, kann der Stator auch beispielsweise über den Abschlußdeckel 142 zusätzlich an einem rotationsfesten Bauteil des Roboters fixiert werden.

Der zur Durchführung eines Schweißprozeßes erforderliche elektrische Strom fließt, beginnend mit dem Schweißstromkabel 118a, das über die Schraubverbindung am Außengewinde 117 mit der Durchführung 114 des Stators verbunden ist, im Stator weiter zum glockenförmigen Abschnitt 123. Dort befinden sich die Kontaktlamellen 145, über die der Strom auf den Schleifring 125 übertragen wird, der ebenfalls zum Stator gehört. Über den Schleifkontakt zwischen der Schleiffläche 126 und der Anschlußglocke 135 wird der Strom auf die versilberte Anschlussglocke 135 übertragen. Die Anschlußglocke 135 ist Bestandteil des Rotors und dreht sich bei einer angetriebenen Rotationsbewegung des Anschlußflanschs 106 zusammen mit dem Gehäuse 141 um die Rotationsachse 108, Die Anschlußglocke 135 besitzt an einer Innenfläche eine konische, ebenfalls versilberte Fläche 137, die mit einem Gegenkonus des Messingflanschs 149 mit Buchse gepaart ist und damit einen fest aufgepressten Sitz hat und somit gute Stromübertragungseigenschaften besitzt. In der Messingbuchse 149 befindet sich eine weitere elektrisch leitfähige Kontaktlamelle 155 X6, mit welcher der Schweißstrom auf den Schweißbrenner über ein eingestecktes Innenrohr übertragen wird. Die Befestigung des Brenners erfolgt über das zum Innenrohr isolierte Befestigungselement 152.

Das Schutzgas kann über das Koaxialkabel 118 durch die Ausnehmung 115 der Durchführung 114 zum Schweißbrennerhals 111 strömen. Der Schweißdraht 7 kann auf dem gleichen Weg ebenfalls dem Schweißbrennerhals 111 zugeführt und jeweils nachgeschoben werden. Soweit es erforderlich ist, kann ein nicht dargestelltes Datenkabel in das Koaxialkabel 118 integriert sein.

**Bezugszeichenliste**

| | | | |
|---|---|---|---|
| 1 | Lichtbogenschweißbrenner | 25b | Einstich/Nut |
| 2 | Mantelrohr | 26 | Absatz |
| 3 | Längsachse | 28 | Einstich/Nut |
| 4 | Brennerhals | 29 | Dichtelement |
| 5 | schweißprozeßseitiges Ende | 30 | Außengewinde (von 25) |
| 6 | hinteres Ende | 32 | Führungselement |
| 7 | Schweißdraht | 32a | Ende/Endbereich |
| 8a | Drahtseele | 32b | konischer Abschnitt |
| 9 | Durchleitung | 32c | Abschnitt |
| 10 | Antriebsrolle | 33 | Dichtelement |
| 11 | Antriebsrolle | 34 | Durchgangsaunehmung |
| 12 | Drahtvorschubeinrichtung | 34a | Absatz |
| 13 | Gehäuse | 35 | Einstich |
| 14 | Endkappe | 36 | gewindeloser Abschnitt |
| 14a | konischer Abschnitt | 37 | Abschnitt mit kleinerem Durchmesser |
| 14 | zylindrischer Abschnitt | | |
| 16 | offene Durchgangsbohrung | 38 | Absatz |
| 17 | gestufte zentrische Ausnehmung | 39 | Außengewinde (von 2) |
| | | 101 | Knickarmroboter |
| 18 | größerer Durchmesser | 102 | Gestell |
| 18a | Innengewinde | 103 | Arm |
| 19 | kleinerer Durchmesser | 104 | Gelenk |
| 19a | Innengewinde | 105 | freies Ende |
| 20 | Stirnseite | 106 | Anschlußflansch |
| 21 | äußerer Absatz | 107 | Schweißbrenner |
| 23 | innerer Durchmesser von 2 | 108 | Rotationsachse |
| 24 | Durchgangsausnehmung von 2 | 109 | Befestigungseinrichtung |
| 25 | hülsenförmiger Einlaufkörper | 110 | Aufnahmeeinrichtung |
| 25a | Durchgangsausnehmung | 111 | Schweißbrennerhals |
| 114 | Durchführung | 142a | Bohrung |
| 114a | Längsnut | 143 | Lager |
| 115 | Ausnehmung | 145 | Kontaktlamelle |
| 116 | Längsachse | 148 | Ring |
| 117 | Außengewinde | 149 | Messingflansch mit Buchse |
| 118 | Koaxialkabel | 150 | Nut (von 126) |
| 118a | Schweißstromkabel | 151 | Kunststofftülle |
| 118b | Außenisolation | 152 | Befestigungselement |
| 118c | Kanal | 153 | Befestigungsring |
| 119 | Konus | 154 | Deckel |
| 123 | glockenförmiger Abschnitt | 155 | Kontaktlamelle |
| 124 | Kontakteinrichtung | | |
| 125 | Schleifring | | |
| 126 | Schleiffläche | | |
| 127 | Druckfeder | | |
| 128 | | | |
| 129 | Ausnehmung | | |
| 130 | Druckfeder | | |
| 133 | Innenfläche | | |
| 134 | Schleiffläche | | |
| 135 | Anschlussglocke (versilbert) | | |
| 136 | Dichtung | | |
| 137 | Flanschfläche | | |
| 141 | Kunststoffgehäuse | | |
| 142 | Abschlußdeckel | | |

## Patentansprüche

1. Lichtbogenschweißbrennereinrichtung mit einer als Schweißdraht ausgebildeten abschmelzenden Elektrode, wobei die Elektrode mit einer Bewegungsrichtung von einem hinteren Ende der Lichtbogenschweißbrennereinrichtung zum Vorschub in Richtung eines vorderen Endes der Lichtbogenschweißbrennereinrichtung vorgesehen ist, in dessen Bereich die Elektrode während eines Lichtbogenschweißprozesses abschmilzt, die Elektrode in der Lichtbogenschweißbrennereinrichtung in einer austauschbaren Drahtseele geführt ist, wobei die Drahtseele wiederum zumindest im Bereich des hinteren Endes des Lichtbogenschweißbrenners in einem die Drahtseele umgebenden und als austauschbares Verschleißteil ausgebildetes Führungselement angeordnet ist, wobei das Führungselement der Drahtseele zum gemeinsamen verschleißbedingten Austausch der Drahtseele vorgesehen ist, **gekennzeichnet**
**durch** eine einstückige Ausbildung des Führungselements zusammen mit einem Bauteil der Lichtbogenschweißbrennereinrichtung, das für den Eintritt des Schweißdrahts in die Lichtbogenschweißbrennereinrichtung eine Eintrittsöffnung aufweist, sowie für die Führung eines als Elektrode vorgesehenen abschmelzenden Schweißdrahts von der Eintrittsöffnung bis zumindest dem hinteren Ende der Drahtseele vorgesehen ist.

2. Lichtbogenschweißbrennereinrichtung nach Anspruch 1, **gekennzeichnet durch** ein aus der Lichtbogenschweißbrennereinrichtung herausragendes und zwischen einer äußeren Endkappe der Lichtbogenschweißbrennereinrichtung und Drahtvorschubmitteln angeordnetes Knickschutzmittel des einstückigen Bauteils für den Schweißdraht, in welchem der Schweißdraht geführt ist.

3. Lichtbogenschweißbrennereinrichtung nach Anspruch 1 oder 2, **dadurch gekennzeichnet, dass** das Knickschutzmittel in der Lichtbogenschweißbrennereinrichtung lösbar angeordnet ist und ein Abschnitt des Knickschutzmittels aus einer Ausnehmung der Endkappe der Lichtbogenschweißbrennereinrichtung hinausragt.

4. Lichtbogenschweißbrennereinrichtung nach zumindest einem der vorhergehenden Ansprüche, **dadurch gekennzeichnet, dass** das Knickschutzmittel einstückig mit einer innerhalb der Lichtbogenschweißbrennereinrichtung angeordneten Aufnahme für eine Drahtseele ausgebildet ist.

5. Lichtbogenschweißbrenner nach zumindest einem der vorhergehenden Ansprüche, **dadurch gekennzeichnet, dass** das Knickschutzmittel verbindungslos an der Lichtbogenschweißbrennereinrichtung angeordnet ist.

6. Lichtbogenschweißbrennereinrichtung nach zumindest einem der vorhergehenden Ansprüche, **dadurch gekennzeichnet, dass** das einstückige Bauteil des Knickschutzmittels und des Führungselements innerhalb der Lichtbogenschweißbrennereinrichtung lösbar fixiert ist, insbesondere an einer äußeren Mantelfläche des Bauteils fixiert ist.

7. Lichtbogenschweißbrennereinrichtung nach zumindest einem der vorhergehenden Ansprüche, **dadurch gekennzeichnet, dass** das Knickschutzmittel aufgrund einer formschlüssigen Anordnung des Knickschutzmittels in axialer Richtung in der Lichtbogenschweißbrennereinrichtung, in einer vorbestimmten Position in der Lichtbogenschweißbrennereinrichtung angeordnet ist.

8. Lichtbogenschweißbrennereinrichtung nach zumindest einem der vorhergehenden Ansprüche, **dadurch gekennzeichnet, dass** das Knickschutzmittel hülsenförmig ausgebildet ist.

9. Lichtbogenschweißbrennereinrichtung nach zumindest einem der vorhergehenden Ansprüche, **dadurch gekennzeichnet, daß** ein maximaler Außendurchmesser eines aus der Durchgangsbohrung hinausragenden Abschnitts des Knickschutzmittels kleiner ist, als der Durchmesser der Durchgangsbohrung der Endkappe, in welcher das Knickschutzmittel angeordnet ist.

10. Lichtbogenschweißbrennereinrichtung nach zumindest einem der vorhergehenden Ansprüche, der zur Anordnung an einem Schweißroboter vorgesehen ist, der einen Roboterarm aufweist, an dem eine relativ zum Roboterarm drehbare Anschlußeinrichtung vorgesehen ist, umfassend
eine Befestigungseinrichtung zur Anbringung der Schweißbrennervorrichtung am Schweißroboter,
eine Aufnahmeeinrichtung zur Halterung eines Schweißbrenners und zur Übertragung von angetriebenen rotatorischen Bewegungen auf den Schweißbrenner,
einen elektrischen Anschluß für ein Schweißstromkabel, mittels dem eine Roboterseite der Schweißbrennervorrichtung mit einer Schweißstromquelle elektrisch verbindbar ist,
eine Stromübertragungseinrichtung, über die das Schweißstromkabel mit einer Schweißbrennerseite der Schweißbrennervorrichtung elektrisch verbindbar ist, wobei die Stromübertragungseinrichtung einen Stator aufweist, der gegenüber dem Roboterarm zur drehfesten Anordnung vorgesehen ist, in Bezug auf die schweißroboterseitige Anschlußeinrichtung jedoch relativ drehbar ist,
eine Durchführung des Stators, durch die zumindest einer der für den Schweißvorgang benötigten Verbrauchsstoffe in Richtung zur Aufnahmeeinrichtung durchführbar ist,
die Aufnahmeeinrichtung und die Befestigungseinrichtung als Rotor ausgebildet sind, die hierdurch relativ gegenüber dem Stator rotierbar sind, und die Aufnahmeeinrichtung und/oder die Befestigungseinrichtung mittels einer elektrischen Kontakteinrichtung mit dem Stator elektrisch leitend verbindbar sind, wobei
die Befestigungseinrichtung des Rotors zur Anbringung an der Anschlußeinrichtung des Roboters ausgebildet ist, und durch die Anbringung an der Anschlußeinrichtung des Roboters eine Drehachse des Rotors mit der Drehachse der Anschlußeinrichtung des Roboters zumindest im wesentlichen fluchtet und der Rotor um die Drehachse sowie um den Stator drehbar ist.

11. Lichtbogenschweißbrennereinrichtung nach Anspruch 10, **gekennzeichnet durch** eine entlang der Drehachse des Rotors verlaufenden Ausnehmung, welche bezüglich der Drehachse zentrisch sowohl durch die Befestigungseinrichtung (109) als auch durch die Aufnahmeeinrichtung (110) verläuft, wobei sowohl eine Eingangsöffnung der Ausnehmung im Stator als auch eine Ausgangsöffnung der Ausnehmung im Rotor bezüglich der Drehachse ebenfalls zentrisch angeordnet sind.
